(19) Europäisches Patentamt
European Patent Office
Office européen des brevets

(11) **EP 2 522 082 B1**

(12) **EUROPÄISCHE PATENTSCHRIFT**

(45) Veröffentlichungstag und Bekanntmachung des Hinweises auf die Patenterteilung:
**18.02.2015 Patentblatt 2015/08**

(51) Int Cl.:
***H04B 3/32*** *(2006.01)*

(21) Anmeldenummer: **11701192.4**

(22) Anmeldetag: **05.01.2011**

(86) Internationale Anmeldenummer:
**PCT/EP2011/000015**

(87) Internationale Veröffentlichungsnummer:
**WO 2011/083077 (14.07.2011 Gazette 2011/28)**

(54) **VORRICHTUNG UND VERFAHREN ZUR KOMPENSATION UND IDENTIFIKATION VON FERNNEBENSPRECHEN**

DEVICE AND METHOD FOR COMPENSATING FOR AND IDENTIFYING FAR-END CROSSTALK

DISPOSITIF ET PROCÉDÉ DE COMPENSATION ET D'IDENTIFICATION DE DIAPHONIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2010 DE 102010004178**

(43) Veröffentlichungstag der Anmeldung:
**14.11.2012 Patentblatt 2012/46**

(73) Patentinhaber: **iAd Gesellschaft für Informatik, Automatisierung und Datenverarbeitung mbH 90613 Grosshabersdorf (DE)**

(72) Erfinder:
• HERRMANN, Georg
  91329 Ebermannstadt (DE)
• HAMPEL, Hermann
  90613 Großhabersdorf (DE)
• BEROLD, Ulrich
  90613 Grosshabersdorf (DE)
• DEINZER, Manfred
  91207 Lauf (DE)
• TZSCHOPPE, Roman
  91080 Uttenreuth (DE)
• HUBER, Johannes, B.
  91094 Langensendelbach (DE)

(74) Vertreter: **Dreykorn-Lindner, Werner Patentanwalt Steinlachstrasse 2 90571 Schwaig (DE)**

(56) Entgegenhaltungen:
EP-A1- 1 775 851      DE-A1-102007 018 585
US-A1- 2001 007 479      US-B1- 6 996 230

• CHAOHUANG ZENG ET AL: "Near-End Crosstalk Mitigation in ADSL Systems", IEEE JOURNAL ON SELECTED AREAS IN COMMUNICATIONS, IEEE SERVICE CENTER, PISCATAWAY, US, Bd. 20, Nr. 5, 1. Juni 2002 (2002-06-01), XP011065509, ISSN: 0733-8716
• LUC VANDENDORPE ET AL: "Fractionally Spaced Linear and Decision-Feedback Detectors for Transmultiplexers", IEEE TRANSACTIONS ON SIGNAL PROCESSING, IEEE SERVICE CENTER, NEW YORK, NY, US, Bd. 46, Nr. 4, 1. April 1998 (1998-04-01), XP011058123, ISSN: 1053-587X
• HONIG M L ET AL: "SUPPRESSION OF NEAR- AND FAR-END CROSSTALK BY LINEAR PRE- AND POST-FILTERING", IEEE JOURNAL ON SELECTED AREAS IN COMMUNICATIONS, IEEE SERVICE CENTER, PISCATAWAY, US, Bd. 10, Nr. 3, 1. April 1992 (1992-04-01), Seiten 614-629, XP002941198, ISSN: 0733-8716, DOI: DOI: 10.1109/49.127783

**Beschreibung**

Die Erfindung betrifft, gemäß den Patentansprüchen 1, 6, 7 und 8, eine Vorrichtung zur Kompensation und Identifikation von Nebensprechen. Weiterhin betrifft die Erfindung, gemäß Patentanspruch 14, ein Verfahren zur Kompensation und Identifikation von Nebensprechen

Eine der wesentlichen Beeinträchtigungen heutiger leitungsgebundener Nachrichtenübertragungssysteme bei Übertragung über vielpaarige Kabel ist das Nebensprechen zwischen den Aderpaaren. Durch eine Reduktion des Nebensprechens ließe sich Reichweite, Datenrate oder Stabilität (oder im Kompromiss eine Kombination aus allen Dreien) steigern.

Prinzipiell lässt sich das Nebensprechen durch einen Austausch der bereits verlegten Kabel durch höherwertige Kabel (mit verringertem Nebensprechverhalten) reduzieren. Im LAN-Bereich (Local Area Network) ist dieses Vorgehen üblich, wenn z.B. das LAN-Netz von 100 Mbit/s auf 1 Gbit/s aufgerüstet wird. Im Ortsnetz ("Letzte Meile") ist ein Austausch des Ortsanschlusskabels jedoch unwirtschaftlich.

Im letzteren Fall ist es wirtschaftlicher, Verfahren und Vorrichtungen zur Kompensation von Nebensprechen einzusetzen. Es existieren im Wesentlichen zwei grundlegend verschiedene Arten Nebensprechen zu kompensieren.

Verfahren und Vorrichtungen zur Lösung des Problems des Übersprechens, insbesondere des Nah- und/oder Fernnebensprechens (Near bzw. Far End Cross Talk, NEXT bzw. FEXT) sind seit langem bekannt. Die erste Möglichkeit ist die Kompensation des Nebensprechens innerhalb des Transceivers. Diese Methode wurde bereits 1995 in der Fachzeitschrift IEEE Journal on Selected Areas in Communications, 1995, vol. 13, pp. 1643-1655, Aufsatz "Bandwidth-Efficient Digital Transmission over Unshielded Twisted-Pair Wiring" von Im, G.-H. and Werner, J.-J. vorgeschlagen und wird z.B. auch in heutigen Gigabit Ethernet Transceivern eingesetzt. Nachteilig an der Methode ist die Notwendigkeit der Kenntnis der gesendeten Daten bzw. der gesendeten Signale aller Nachbarkanäle dessen Nebensprechstörungen kompensiert werden sollen. Diese Notwendigkeit gestattet es nicht in bestehenden Netzinfrastrukturen Nebensprechkompensation nach der beschriebenen Methode nachträglich zu integrieren.

Die zweite Möglichkeit besteht darin das Nebensprechen extern, d.h. außerhalb der Nachrichtenübertragungsgeräte, zu kompensieren. Diese Methode wurde bereits in der Europäischen Patentanmeldung 1 775 851 A1 einer der Anmelderinnen durch eine Kompensationsschaltung, eine Kompensationseinheit und ein Verfahren zum Kompensieren des Nebensprechens beschrieben. Die Kompensationsschaltung zur Ermittlung und Kompensation von Störsignalen, insbesondere eines Nebensprechsignals aus einer Nebensprechquelle in einem Nachrichtenübertragungssystem mit mindestens zwei Signalleitungen eines Leitungsbündels, mit einer Kompensationseinrichtung, weist auf:

- einen Störsignaleingang, der nach Maßgabe der Nebensprechquelle ein Störsignal empfängt,
- eine mit dem Störsignaleingang verbundene Kompensationssteuerung,
- eine mit der Kompensationssteuerung verbundene Kompensationssignalquelle, die eine steuerbare Stromquelle aufweist und nach Maßgabe des Störsignals ein Kompensationssignal zur Beaufschlagung ein erstes Signals auf der ersten Signalleitung erzeugt, indem als Kompensationssignal ein gesteuerter Kompensationsstrom für die parallele Einspeisung erzeugt wird,

so dass ohne eine Gabelschaltung zur Trennung von Empfangs- und Senderichtung der Signale auf den Signalleitungen und ein für mindestens Gleichstrom ununterbrochener Lauf der Signalleitungen bei Kompensation des Nebensprechens auf diesen Signalleitungen ermöglicht wird. Beim den in der Europäischen Patentanmeldung EP 1 775 851 A1 beschriebenen Nebensprech-Kompensationsverfahren wird nach Maßgabe eines nebensprechenden Signals ein Kompensationsstrom erzeugt, der parallel in die zu kompensierende Signalleitung eingespeist wird. Es wird nicht wie beim Stand der Technik eine gesteuerte Kompensationsspannung seriell eingespeist. Wegen der parallelen Einspeisung des Kompensationsstroms kann die zu kompensierende Signalleitung für Gleichstrom (u.a. Fernspeisung) ununterbrochen bleiben. Damit erlaubt die Leitung das einfache Fernspeisen von Telekommunikationskomponenten über die Signalleitung mit Gleichspannung. Zur Erzeugung des kompensierenden Signals wird vorzugsweise die Nebensprech-Impulsantwort des Systems zur Kompensation verwendet, insbesondere indem sie zur Nachbildung eines zum Nebensprechen gegengleichen Signals herangezogen wird. Die Kompensationssteuerung kann vergleichsweise komplex sein und nach Maßgabe von einem oder mehreren Parametern bzw. Koeffizienten h, aus einem Störsignal $u_m(t)$ das Steuerungssignal $u_s(t)$ erzeugen. Die Koeffizienten h können von einer Ermittlungseinrichtung einmalig oder auch wiederholt ermittelt und der Kompensationssteuerung eingeschrieben werden. Die Nebensprechkompensation kann ein- und ausschaltbar sein. Hierzu kann ein Schalter im Stromzuführzweig vorgesehen werden. Statt eines Schalters kann aber auch das Steuern der Stromquelle auf Null vorgesehen sein. Die Kompensationseinrichtung kann ein adaptives Filter sein oder aufweisen. Das adaptive Filter wird vom zu filternden Signal auf der Signalleitung durchlaufen. Die Referenzspannung des adaptiven Filters entspricht dem Störsignal $u_m(t)$. Das adaptive Filter kann Filterkoeffizienten aufweisen, nach deren Maßgabe die Filterung erfolgt. Die Filterkoeffizienten können einmalig oder mehrmalig eingestellt werden. Die Filterkoeffizienten können Koeffizienten sein, die die Nebensprech-Impulsantwort beschreiben, beispielsweise als Abtastwerte über der Zeit.

Das adaptive Filter speist einen geeignet gesteuerten Strom parallel in die Signalleitung (bzw. eine Durchleitung) ein. Die Kompensationsschaltung kann an ihren beiden Eingängen/Ausgängen Verzögerungsschaltungen bzw. Totzeitschaltungen aufweisen. Sie sollen die Nebensprech-Impulsantwort auf einem Fernmeldkabel verzögern, sodass dementsprechend eine Kompensationseinrichtung mehr Zeit hat, die Kompensation zu bewirken, und der analoge Schaltungsaufwand kann sinken oder sogar ganz unterbleiben. Vorteilhaft an dieser Methode ist die prinzipielle Unabhängigkeit von den Nachrichtenübertragungssystemen, die eine nachträgliche Installation des Kompensationssystems in den Netzen gestattet.

In vielen Publikationen, auch für andere technische Anwendungsfälle, wird ein Kompensationsfilter heutzutage als reines digitales adaptives Filter implementiert. In der Europäischen Patentanmeldung EP 1 775 851 A1 einer der Anmelderinnen wird als Kompensationsfilter eine Kombination aus einem adaptiven digitalen Filter und einem adaptiven analogen Filter vorgeschlagen, um das Kompensationssignal mit möglichst geringer Verzögerungszeit zu erzeugen.

Die Erzeugung eines Replika-Signals zur Kompensation mittels eines digitalen bzw. gemischt analog/digitalen Filters zur Kompensation von Nebensprechen erfolgt in der Praxis mit einer gewissen Verzögerungszeit, welche die Zeit für die A/D-Wandlung, für die digitale Filterung, für die D/A-Wandlung sowie für die analoge Rekonstruktionsfilterung umfasst. Die Kompensationsschaltung gemäß der Europäischen Patentanmeldung EP 1 775 851 A1 kann an ihren beiden Eingängen/Ausgängen Verzögerungsschaltungen bzw. Totzeitschaltungen aufweisen, welche die Nebensprech-Impulsantwort auf einem Fernmeldkabel verzögern sollen, sodass dementsprechend eine Kompensationseinrichtung mehr Zeit hat, die Kompensation zu bewirken und der analoge Schaltungsaufwand sinkt oder sogar ganz unterbleiben kann. Ein solches Totzeitglied soll idealerweise einen möglichst konstanten Amplitudengang und eine konstante Gruppenlaufzeit haben, sodass es ein einlaufendes Signal qualitativ im Wesentlichen unverändert lässt und es lediglich um eine bestimmte Zeit t verzögert. Das Verzögerungsglied, als Bestandteil eines Filters mit analogen und digitalen Filterkoeffizienten, hat dabei eine feste Verzögerungszeit und realisiert eine Verzögerung des zu filternden Signals innerhalb einer sogenannten "tapped-delay-line"-Struktur. Bei einer Ausführungsform eines analogen Totzeitglieds gemäß der Europäischen Patentanmeldung EP 1 775 851 A1 weist dieses längs in die Adern der Signalleitung bzw. einer Durchleitung eingeschaltete Induktivitäten gleicher Größe und zwei jeweils diagonal verschaltete Kapazitäten ebenfalls gleicher Größe auf. Mehrere solcher Schaltungen können vor einem oder beiden Eingängen/Ausgängen in Serie geschaltet sein.

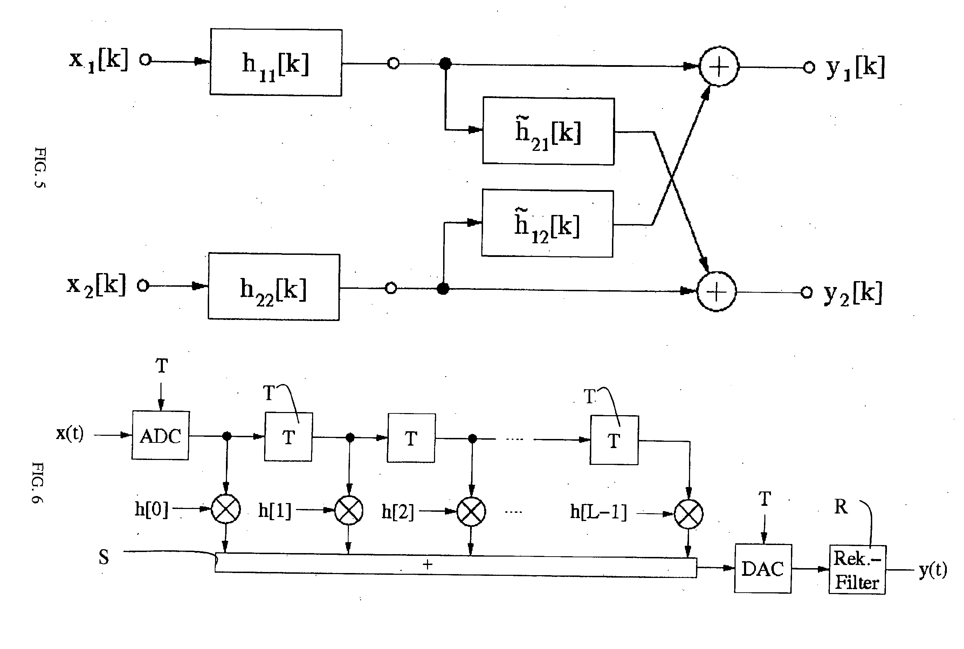

FIG. 6 zeigt eine Ausführungsform eines rein digitalen Kompensationsfilters. Das Replika-Signal soll in einem Frequenzbereich von -1/(2T) bis 1/(2T) erzeugt werden. Dazu wird das Eingangssignal x(t) durch den A/D-Wandler (ADC) abgetastet, im Takt 1/T digital gefiltert, und im Takt 1/T D/A-gewandelt (DAC) und optional mit einem Rekonstruktionsfilter entzerrt/geglättet. Man spricht daher von einem "T-Spaced Canceller".

Transversale Filterstrukturen, dessen Verzögerungsleitung Anzapfungen im zeitlichen Abstand eines Bruchteils des "natürlichen" Symbolabstandes T aufweisen, werden in der Literatur als "Fractionally Spaced Filter" FSF bezeichnet. Solche Filter sind bereits zur Lösung anderer Aufgabenstellungen zur Anwendung gekommen. Die dabei genutzten Eigenschaften der Fractionally Spaced Filter unterscheiden sich aber grundsätzlich von der Prädiktionseigenschaft, die die Schlüsselrolle beim FSC-XTC (Fractionally Spaced Canceller-Crosstalk Canceller als Spezialfall eines FSF) zur Kompensation von Nebensprechen spielt.

Erstmalig kamen Fractionally Spaced Filter zur Entzerrung von Empfangssignalen, die bei der leitungsgebundenen Datenübertragung durch das Kabel linear verzerrt sind, zum Einsatz ("Fractionally Spaced Equalizer"). Erste Veröffentlichungen hierzu sind dem Konferenzband "Allerton Conference on Circuit and System Theory", 1969, pp. 792-803, Aufsatz "Signal filtering with the transversal equalizer" von Lucky, R. W. und "Proceedings of IEEE International Conference on Communications 1970", 1970, pp. 21-35 - 21-39, Aufsatz "An adaptive coherent diversity receiver for data transmission through dispersive media" von Brady, D. M. zu entnehmen. Fractionally Spaced Equalizer spielen hauptsächlich wegen der bei der digitalen Modulation üblichen Banderweiterung ("excess bandwith") durch die Pulsformung eine Rolle. Eine Abtastung und Entzerrung des Empfangssignals mit der Symbolrate 1/T ist bei der Basisbandübertragung ausreichend ("T-Spaced Equalizer").

Bei trägermodulierter Übertragung kann es durch Kanäle, die im unteren und oberen Überlappungsband unterschiedliche Eigenschaften aufweisen zu Verzerrungen kommen, die mit einem T-Spaced Equalizer nicht mehr vollständig entzerrbar sind. In solchen Fällen können Fractionally Spaced Equalizer vorteilhaft sein. Ein weiterer Vorteil des Fractionally Spaced Equalizer ist, dass dessen Ausgangssignal zu jeder beliebigen Abtastzeit-Phase interpoliert werden kann.

Letztgenannter Vorteil ist auch der Hauptgrund für den Einsatz eines "Fractionally Spaced Echo Cancellers" zur Echokompensation bei der digitalen Datenübertragung über Kabel. Durch die beliebige Interpolierbarkeit des Ausgangssignals kann auf aufwändige Synchronisationsmechanismen (z.B. Master-Slave-Synchronisation) zwischen den Transceivern verzichtet werden. Erste Veröffentlichungen zu Fractionally Spaced Echo Canceller sind in den Fachzeitschriften IEEE Transcations on Communications, 1977, vol. 25, pp. 654-666, Aufsatz "A Passband Data-Driven Echo Canceller for Full-Duplex Transmission on Two-Wire Circuits" von Weinstein, S. B. oder "The Bell System Technical Journal", 1979, vol. 58, pp. 1593-1616, Aufsatz "Adaptive echo cancellation/AGC structures for two-wire full-duplex transmission on two-wire circuits" von Falconer, D. D. and Mueller, K. H. oder "IEEE Journal on Selected Areas in Communications", 1984, vol. 2, pp. 722-730, Aufsatz "An Echo-Cancellation-Based 4800 Bit/s Full-Duplex DDD Modem" von Werner, J.-J. beschrieben. Eine der Adaption des Fractionally Spaced Echo Cancellers betreffende Verbesserung, dahingehend dass das empfangene Signal rekonstruiert wird und vom Fehlersignal zur Adaption des Echo Cancellers abgezogen wird, findet sich in der US 6,996,230 B1.

In der Fachzeitschrift "IEEE Journal on Selected Areas in Communications, 1995, vol. 13, pp. 1643-1655", Aufsatz "Bandwidth-Efficient Digital Transmission over Unshielded Twisted-Pair Wiring" von Im, G.-H. and Werner, J.-J. werden die Prinzipien "Cancellation" (Auslöschung) und "Equalization" (Entzerrung) an Hand von Methoden zur Reduktion von Nahnebensprechen (NEXT) strikt getrennt. Das Prinzip "Cancellation" erfordert den direkten Zugriff auf die Sendedaten (bzw. das Sendesignal) des zu bekämpfenden Störers. Das Störsignal kann damit weitgehend komplett ausgelöscht werden.

Das Prinzip "Entzerrung" erfordert diesen Zugriff jedoch nicht, setzt aber eine große Banderweiterung (großer Roll-off Faktor) voraus. Prinzipbedingt kann bei einer üblichen Banderweiterung - vor allem bei mehreren Störern - eine vollständige Unterdrückung des Störsignals nicht erfolgen. Die US 6,553,085 B1 beschreibt eine Kombination eines "Fractionally Spaced Linear Equalizer" und eines "Decision Feedback Equalizer" um Nebensprechen zu unterdrücken. Die Methode benötigt keinen direkten Zugriff auf die Nebensprechen erzeugenden Signale, setzt jedoch Sendesignale mit einer starken Banderweiterung sowie synchrone Sender voraus. Somit ist diese Technik direkt in die Nachrichtenübertragungssysteme zu integrieren und kann nicht extern angeschlossen werden.

Ein "Canceller" im Sinne der Unterscheidung nach der oben erwähnten Druckschrift "IEEE Journal on Selected Areas in Communications, 1995, vol. 13, pp. 1643-1655", der nach dem Prinzip eines "Fractionally Spaced Filter" arbeitet wird zur Kompensation von Kreuzpolarisations-Interferenzen in dem Konferenzband "Proc. Globecom", 1986, pp. 15.3.1-15.3.7, Aufsatz "Cross Polarization Interference Canceller for QAM Digital Radio Systems with Asynchronous Clock and Carrier Signals" von Lankl, B. vorgestellt ("Cross Polarization Interference Canceller"). Hier spielt wiederum die Eigenschaft, dass das Ausgangssignal eines "Fractionally Spaced Filters" zu beliebigen Abtastphasen interpoliert werden kann, eine wichtige Rolle. Sie gewährt eine größere Unempfindlichkeit gegenüber Schwankungen der Abtastphasen zwischen Haupt- und interferierendem Signal.

Eine Weiterentwicklung dieses Ansatzes findet sich z.B. in der EP 0 522 534 B1 in welcher ein Kreuzpolarisationsinterferenzkompensator mit fraktionierten Koeffizienten zur Vermeidung des "Schieflauf" (skewer)-Phänomens (bei dem Niveaus von Null und frei ändernde Niveaus sich abwechseln) beschrieben ist. Im Einzelnen umfasst der Kreuzpolarisationsinterferenzkompensator:

eine erste Analog/Digital-Umwandlungsvorrichtung, um ein erstes von der ersten polarisierten Welle erhaltenes Basisbandsignal in ein erstes digitales Signal umzuwandeln;
eine zweite Analog/Digital-Umwandlungsvorrichtung, um ein zweites von einer zweiten polarisierten Welle, die orthogonal zu der ersten polarisierten Welle ist, erhaltenes Basisbandsignal in ein zweites digitales Signal mit einer ganzzahlig vielfachen Frequenz einer Frequenz der Übertragungsdaten umzuwandeln;
eine Filtervorrichtung, um das zweite digitale Signal in ein Ausgleichssignal mit der ganzzahlig vielfachen Frequenz zu formen; wobei die Filtervorrichtung unter Verwendung eines Fehlersignals in einem kompensierten Signal gesteuerte Koeffizienten aufweist;
eine Addiervorrichtung, um das Ausgleichssignal zu dem ersten digitalen Signal zu addieren, um dadurch das kompensierte Signal auszugeben; und
eine Fehlersignalerzeugungsvorrichtung um das Fehlersignal mit der ganzzahlig vielfachen Frequenz zu erzeugen.

Da die Kompensationsergebnisse sowohl in der zweiten Hälfte der Datenintervalle als auch der ersten Hälfte zu dem Kompensationssignalerzeuger zurückgeführt werden, konvergiert eine Kompensationssignalausgabe des Kompensationssignalerzeugers in dem extremen Fall von D/U = ∞ auf ein Niveau von Null und das " Schieflauf" (skewer)-Phänomen tritt nicht auf.

Verfahren zur Identifikation linearer zeitinvarianter bzw. langsam zeitvarianter Systeme dienen der Schätzung der Übertragungsfunktion bzw. der Impulsantwort eines zunächst unbekannten Systems anhand der Beobachtung von Ein- und Ausgangssignal, wobei üblicherweise auf die Wahl des Eingangssignals kein Einfluss besteht. Falls das Eingangssignal nicht direkt zugänglich ist, werden zur Systemidentifikation entweder vereinbarte Trainingssignale verwendet, oder aber es werden Verfahren zur blinden Identifikation eingesetzt.

Im speziellen ist hier die Identifikation von Impulsantworten bzw. Übertragungsfunktionen von durch Nebensprechen verkoppelten Leitungen von Interesse. Beispielsweise ist aus dem DE 10 2007 018 585 B4 einer der Anmelderinnen eine Vorrichtung und ein Verfahren zur Identifikation von reziprok verkoppelten Leitungen offenbart. Zur Ermittlung und Kompensation von Störsignalen in einem Nachrichtenübertragungssystem mit mindestens zwei Aderpaaren eines symmetrischen Leitungsbündels weist im Einzelnen die Vorrichtung auf:

• Anschlüsse zum beidseitigen Anschluss der Signalleitungen der Adernpaare,

- den Anschlüssen nachgeordnete Totzeitglieder,
- mindestens eine den Totzeitgliedern nachgeordnete Kompensationsschaltung mit einem Störsignaleingang und einer Kompensationssignalquelle, welche ein Kompensationssignal in das jeweilige Adernpaar einspeist,
- eine Störkenngrößen-Ermittlungseinrichtung zum Ermitteln mindestens einer das Nebensprechen charakterisierenden Störkenngröße anhand eines ersten Signals und des Störsignals und
- eine mit der Störkenngrößen-Ermittlungseinrichtung verbundene Kompensationssteuerung, welche das Abschalten und Zuschalten von Kompensationsschaltungen, die Einstellung von Filterkoeffizienten eines adaptiven Filters und die Kompensationssignalquelle steuert,

derart, dass die Störkenngrößen-Ermittlungseinrichtung nicht eine direkte Schätzung einer kausalen Impulsantwort vornimmt, sondern eine akausale zeitdiskrete Impulsantwort ermittelt, deren Fourier-Transformierte die Übertragungsfunktion des kausalen zeitkontinuierlichen Systems bis zur Nyquist-Frequenz nachbildet. Weiterhin ist eine Klassifikationseinheit vorgesehen, welche die Signale auf den Adernpaaren oder von Signalen eines Nachrichtenübertragungssystems, welches die Information über das Medium Energiekabel verteilt oder von einem Energiekabel abgegriffenen Signal beobachtet, diese entsprechend ihres Störvermögens und/oder ihrer Störbarkeit klassifiziert und dann die Zuordnung von Kompensationsschaltungen steuert. Dabei kann das Verfahren mehrfach zur Identifikation aller reziprok verkoppelten Adernpaaren des symmetrischen Leitungsbündels angewandt werden. Da im Fall von Nahnebensprechen zwei Leitungen jeweils reziprok verkoppelt sind, ist dieses Verfahren zur Identifikation von Nahnebensprechpfaden geeignet. Im Fall von Fernnebensprechen sind jeweils zwei Leitungen nicht reziprok verkoppelt, so dass sich dieses Verfahren hier nicht einsetzen lässt.

**FIG. 5** zeigt ein zeitdiskretes Systemmodell zweier Leitungen, die nicht reziprok verkoppelt sind (Fernnebensprechen). Die Signale $x_1[k]$ und $x_2[k]$ stellen die Sendesignale die am nahen Ende der Leitungen eingespeist werden dar. Die Impulsantworten $h_{11}[k]$ und $h_{22}[k]$ charakterisieren die direkten Pfade der beiden Leitungen. Die beiden Pfade des Fernnebensprechens (FEXT) ergeben sich durch die Konkatenation von $h_{11}[k]$ und $\tilde{h}_{21}[k]$ bzw. von $h_{22}[k]$ und $\tilde{h}_{12}[k]$.

Die Impulsantworten $\tilde{h}_{21}[k]$ und $\tilde{h}_{12}[k]$ repräsentieren die "Equal Level Far-End Crosstalk" (ELFEXT) Pfade, aus denen die direkten Pfade der beiden Leitungen herausgerechnet sind. Ziel ist es aus den beobachtbaren Signalen $y_1[k]$ und $y_2[k]$ die ELFEXT Impulsantworten $\tilde{h}_{21}[k]$ und $\tilde{h}_{12}[k]$ zu identifizieren. Ohne Zugriff auf die eingespeisten Signale $x_1[k]$ und $x_2[k]$ lassen sich prinzipiell nur die ELFEXT, nicht aber die FEXT Pfade ermitteln.

Im Systemmodell nach **FIG. 5** sind die Sendesignale, welche am fernen Ende eingespeist werden, nicht eingezeichnet. Die eigentlich beobachtbaren Leitungssignale umfassen diese Signale jedoch. Wie die vorstehende Würdigung des Standes der Technik aufzeigt, sind für unterschiedliche Anwendungsfälle entsprechend ausgestaltete Vorrichtungen und Verfahren zur Kompensation und Identifikation von Nebensprechen, insbesondere des Nahnebensprechens NEXT bekannt. Zuwenig Beachtung findet die in der Praxis anzutreffende Situation der nicht reziprok verkoppelten Systeme. Deshalb fehlen in der Praxis Vorrichtungen und Verfahren zur Kompensation und Identifikation von Fernnebensprechen FEXT, bei welchen eine zuverlässige Identifikation eines unbekannten Systems ermöglicht wird. Besonders bedeutsam ist dies, weil die Telekommunikations-Industrie, seit vielen Jahren als fortschrittliche, entwicklungsfreudige Industrie anzusehen ist, die schnell Verbesserungen und Vereinfachungen aufgreift und in die Tat umsetzt.

Der Erfindung liegt gegenüber den bekannten Vorrichtungen und Verfahren zur Kompensation und Identifikation von Nebensprechen in einem Nachrichtenübertragungssystem die Aufgabe zugrunde, diese derart weiterzuentwickeln, dass eine Kompensation des Fernnebensprechens FEXT, bei dem die Adernpaare des Leitungsbündels nicht reziprok verkoppelt sind, ermöglicht wird.

Diese Aufgabe wird, ausgehend von einer Vorrichtung zur Ermittlung und Kompensation von Störsignalen in einem Nachrichtenübertragungssystem mit mindestens zwei Adernpaaren eines symmetrischen Leitungsbündels und mit den Merkmalen im Oberbegriff des Patentanspruchs 1, dadurch gelöst, dass zur Verzögerung des gefilterten Signals dem adaptiven Filter, welches als digitales Kompensationsfilter mit jeweils durch ein erstes Verzögerungsglied mit der Verzögerungszeit T zeitlich getrennt angeordneten Filterkoeffizienten ausgestaltet ist, ein zusätzliches Verzögerungsglied mit einstellbarer Verzögerungszeit $\tau$ nach oder vorgeschaltet ist und dass die Einstellung der zusätzlichen Verzögerungszeit $\tau$ zusammen mit der Einstellung von Filterkoeffizienten zur Kompensation des Fernnebensprechens FEXT, bei dem die Adernpaare nicht reziprok verkoppelt sind, erfolgt.

Bei der erfindungsgemäßen Vorrichtung erfolgt im Vergleich zum vorstehend gewürdigten Stand der Technik erstmalig die künstliche Einbringung einer zusätzlichen Verzögerung, welche zu einer besseren Kompensation führt. Im Vergleich zum Stand der Technik gemäß der EP 1 775 851 A1 mit einem Verzögerungsglied als Bestandteil eines Filters mit analogen und digitalen Filterkoeffizienten und mit einer festen Verzögerungszeit wird mit dem zusätzlichen einstellbaren Verzögerungsglied gemäß der Erfindung das Ausgangssignal des Kompensationsfilters verzögert. Dadurch wird erstmalig eine bessere Anpassung der Übertragungsfunktion des digitalen Kompensationsfilters (inklusive der zusätzlichen Verzögerungszeit) an die vorliegende Nebensprechübertragungsfunktion, welche zu Kompensationszwecken sehr genau approximiert werden muss, erreicht. Wie umfangreiche Untersuchungen und Analysen nämlich gezeigt haben, führt bei der Kompensation von Nebensprechen mit einem T-Spaced Canceller nicht unbedingt die geringste Verzögerungszeit zu einer besseren Kompensation. Die optimale Größe der zusätzlichen Verzögerungszeit τ ist individuell von der gegebenen Nebensprechsituation, d.h. von den Nebensprechenerzeugenden und Nebensprechen-empfangenden Doppeladerpaaren, abhängig. Bei der erfindungsgemäßen Vorrichtung ist die zusätzliche Verzögerungszeit τ für das Kompensationsfilter (automatisch) einstellbar.

Weiterhin wird diese Aufgabe, ausgehend von einer Vorrichtung zur Ermittlung und Kompensation von Störsignalen in einem Nachrichtenübertragungssystem mit mindestens zwei Adernpaaren eines symmetrischen Leitungsbündels und mit den Merkmalen im Oberbegriff des Patentanspruchs 6, dadurch gelöst, dass zur Kompensation des Fernnebensprechens FEXT, bei dem die Adernpaare nicht reziprok verkoppelt sind, das adaptive Filter als digitales Kompensationsfilter ausgestaltet ist, dass das Eingangssignal in einem A/D-Wandler mit der Rate M/T A/D-gewandelt wird, dass die Filterkoeffizienten jeweils durch K Verzögerungsglieder mit der Verzögerungszeit T/M zeitlich getrennt angeordnet sind und dass das Ausgangssignal des Kompensationsfilters in einer Abtasteinrichtung um den Faktor M heruntergetastet und in einem D/A-Wandler mit dem Takt 1/T D/A-gewandelt wird oder das Ausgangssignal des Kompensationsfilters im D/A-Wandler mit dem Takt M/T D/A-gewandelt wird.

Diese erfindungsgemäße Vorrichtung, welche auf einem "Fractionally Spaced Filter" basiert, weist den Vorteil auf, dass diese die Kompensation von Nebensprechen, insbesondere von Fernnebensprechen unabhängig von den Nachrichtenübertragungssystemen ermöglicht und im Rahmen der Erfindung auch für die Kompensation von Nahnebensprechen, insbesondere beim Gegenstand der DE 10 2007 018 585 B4 einer der Anmelderinnen eingesetzt werden kann.

Weiterhin wird diese Aufgabe, ausgehend von einer Vorrichtung zur Ermittlung und Kompensation von Störsignalen in einem Nachrichtenübertragungssystem, gemäß Patentanspruch 7 dadurch gelöst, dass zur Kompensation des Fernnebensprechens FEXT, bei dem die Adernpaare nicht reziprok verkoppelt sind, das adaptive Filter als digitales Kompensationsfilter mit M parallelen Filterpfade ausgestaltet ist, dass das Eingangssignal x(t) in einem A/D-Wandler mit dem Takt T A/D-gewandelt wird, dass in den M parallelen Filterpfaden jeweils die mit den Filterkoeffizienten verknüpften Signale in einem D/A-Wandler mit dem Takt 1/T D/A-gewandelt werden, deren Ausgangssignale ab dem zweiten Filterpfad individuell durch jeweils ein Verzögerungselement verzögert oder am jeweiligen D/A-Wandler verzögert ausgegeben werden und dass die M Filterpfade einem Summierer S zugeführt werden.

Diese Ausgestaltung der erfindungsgemäßen Vorrichtung weist den Vorteil auf, dass die Überabtastung - wie beim Gegenstand des Patentanspruchs 8 - eingespart wird, hat jedoch den Nachteil, dass M verschiedene D/A-Wandler benötigt werden, deren Ausgangssignale individuell durch ein analoges Verzögerungselement verzögt werden. Alternativ kann die Verzögerung wiederum durch eine entsprechend verzögerte Signalausgabe im D/A-Wandler erfolgen.

Weiterhin wird diese Aufgabe, ausgehend von einer Vorrichtung zur Ermittlung und Kompensation von Störsignalen in einem Nachrichtenübertragungssystem, gemäß Patentanspruch 8 dadurch gelöst, dass zur Kompensation des Fernnebensprechens FEXT, bei dem die Adernpaare nicht reziprok verkoppelt sind, das adaptive Filter als digitales Kompensationsfilter mit M parallelen Filterpfade ausgestaltet ist, dass das Eingangssignal x(t) in einem A/D-Wandler mit dem Takt T A/D-gewandelt wird und dass jeweils eines der im Teilfilter mit dem Filterkoeffizienten verknüpften Signale über den jeweiligen Abgriff eines Vielfachschalters einem D/A-Wandler zugeführt und dort mit dem Takt T/M D/A-gewandelt wird.

Diese Ausgestaltung der erfindungsgemäßen Vorrichtung weist den Vorteil auf, dass die Notwendigkeit von M-fach D/A-Wandlern - wie beim Gegenstand des Patentanspruchs 9 - entfallen ist und dass lediglich ein D/A-Wandler benötigt wird, der aber mit M/T getaktet ist.

Weiterhin wird diese Aufgabe, ausgehend von einer Vorrichtung zur Ermittlung und Kompensation von Störsignalen in einem Nachrichtenübertragungssystem mit mindestens zwei Adernpaaren eines symmetrischen Leitungsbündels und mit den Merkmalen im Oberbegriff des Patentanspruchs 14, dadurch gelöst, dass aus der geschätzten Kreuzkorrelationsfunktion der Vektor

$$\hat{\phi}_{y_1 y_2} \stackrel{\text{def}}{=} \left[ \dot{\phi}_{y_1 y_2}[-(q_1^{(\tilde{h}_{21})} + q_2^{(\tilde{h}_{21})})] \, \ldots \, \dot{\phi}_{y_1 y_2}[q_1^{(\tilde{h}_{12})} + q_2^{(\tilde{h}_{12})} + 1] \right]^{\mathrm{T}}$$

gebildet wird und dass die beiden Impulsantworten wie folgt geschätzt werden:

$$\left[ \begin{array}{c} \hat{\hat{h}}_{21} \\ \hat{\hat{h}}_{12} \end{array} \right] \stackrel{\text{def}}{=} \left( \left[ \begin{array}{cc} \hat{\hat{\phi}}_{y_1 y_1} & \hat{\phi}_{y_2 y_2} \end{array} \right] + \delta \cdot \mathbf{I} \right)^{-1} \hat{\phi}_{y_1 y_2}$$

,

wobei der Operator (●)⁻¹ die Matrixinversion, $\delta$ die Regularisierung (regularisierte Schätzung) und I die Einheitsmatrix bezeichnet und die beiden geschätzten Impulsantworten der Einstellung der Kompensationsfilter zur Kompensation des Fernnebensprechens FEXT, bei dem die Adernpaare nicht reziprok verkoppelt sind, nicht aber zur Identifikation von Störsignalen dienen.

Diese Ausgestaltung des erfindungsgemäßen Verfahrens weist den Vorteil auf, dass die beiden geschätzten Impulsantworten zur Einstellung der Kompensationsfilter/adaptiven Filter eines T-Spaced Crosstalk Cancellers, eines T-Spaced Crosstalk Cancellers mit einstellbarer Verzögerungszeit bzw. eines Fractionally Spaced Crosstalk Canceller dienen können.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:

FIG. 1    die schematische Darstellung einer ersten Ausführungsform der erfindungsgemäßen Vorrichtung zur Kompensation und Identifikation von Störsignalen in einem Nachrichtenübertragungssystem,

FIG. 2    die schematische Darstellung einer zweiten Ausführungsform der erfindungsgemäßen Vorrichtung,

FIG. 3    die schematische Darstellung einer dritten Ausführungsform der erfindungsgemäßen Vorrichtung,

FIG. 4    die schematische Darstellung einer vierten Ausführungsform der erfindungsgemäßen Vorrichtung,

FIG. 5    das Blockschaltbild eines Nebensprechsystems als nicht reziprok verkoppeltes zeitdiskretes System,

FIG. 6    die schematische Darstellung eines digitalen Kompensationsfilters,

FIG. 7    die schematische Darstellung einer Ausführungsform der Anordnung in einem Nachrichtenübertragungssystem und

FIG. 8    die schematische Darstellung einer Ausführungsform der Zusammenfassung der Signale am Ausgang der Kompensationsschaltung.

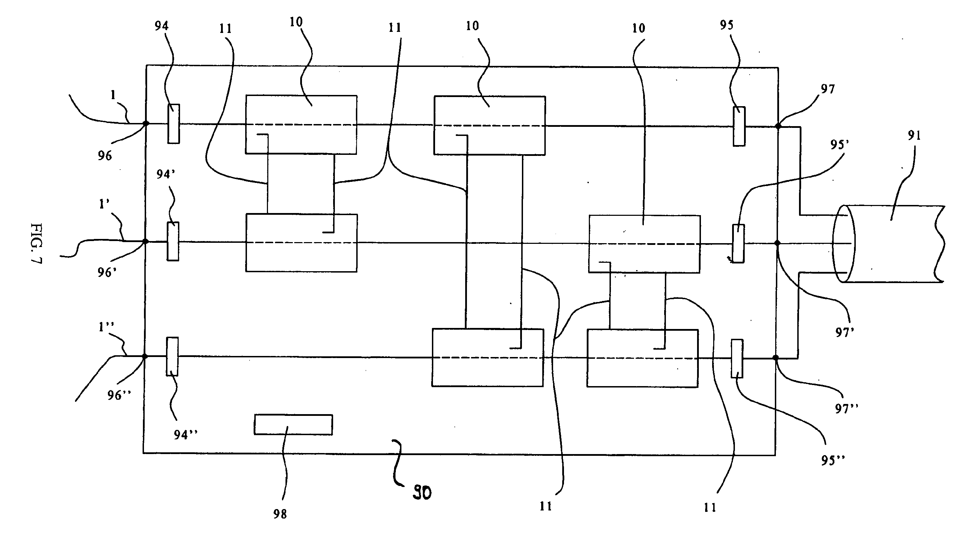

FIG. 7 zeigt eine in der Europäischen Patentanmeldung EP 1 775 851 einer der beiden Anmelderinnen beschriebene Ausführungsform, bei der für jede paarweise vorzunehmende Kompensation eine eigene Kompensationsschaltung 10 vorgesehen ist, d.h. für drei zu kompensierende Signalleitungen 1, 1', 1" sechs Kompensationsschaltungen 10 mit jeweils einem Störsignaleingang 11. Dabei weisen die Kompensationsschaltungen an ihren beiden Eingängen/Ausgängen Verzögerungsschaltungen bzw. Totzeitschaltungen 94, 95 auf. Es ist nicht ohne weiteres möglich, eingangsseitig, also bei den Störsignaleingängen 11, die Störsignale zusammenzufassen, so dass pro Signalleitung 1, 1', 1" nur eine einzige Kompensationsschaltung 10 notwendig ist, d.h. die Referenzsignale mehrerer Aderpaare zu addieren und der Kompensationsschaltung 10 (in Summe) zuzuführen, so dass diese das Summensignal verarbeitet. Ein Zusammenfassen der Signale am Ausgang der Kompensationsschaltung 10 ist jedoch möglich (und aufgrund des Realisierungsaufwandes auch eine vorteilhafte Ausgestaltung).

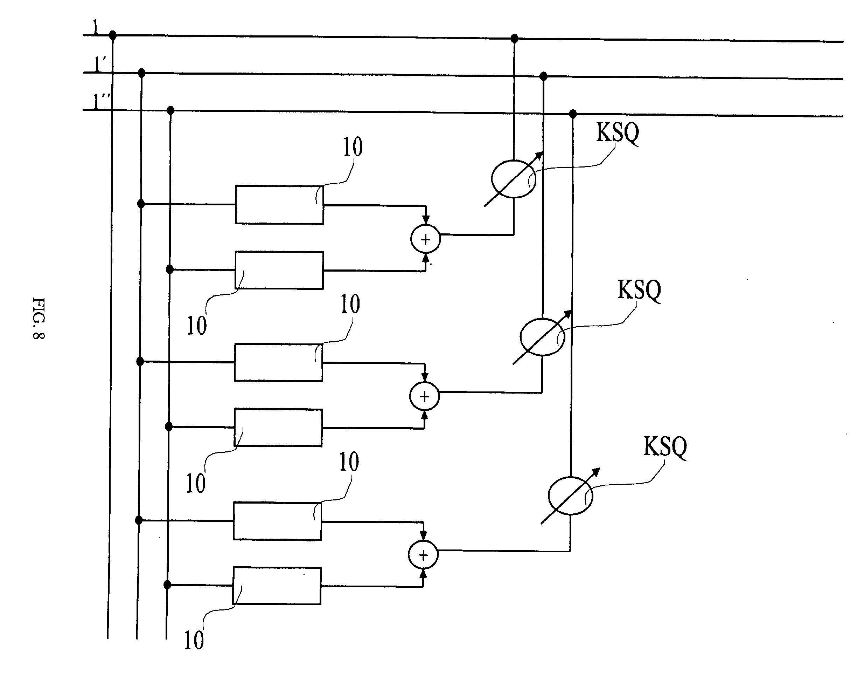

FIG. 8 zeigt am Beispiel von drei Adernpaaren wie die Kompensationssignale für ein Adernpaar 1 zur Kompensation der von weiteren Adernpaaren 1', 1" verursachten Störsignale zusammengefasst (am Ausgang der Kompensationsschaltung 10) und gemeinsam einer Kompensationssignalquelle KSQ zugeführt werden. Dadurch ist vorteilhaft pro Adernpaar 1 eine Kompensationssignalquelle KSQ zur Kompensation ausreichend.

Wenn nur eine Kompensationsschaltung 10 pro Leitung vorgesehen ist, kann auch die Erzeugung des Kompensationssteuerungssignals noch getrennt nach den einzelnen Leitungspaarungen entsprechend den dort jeweils geltenden Verkopplungen (Impulsantwort bzw. Übertragungsfunktion) erfolgen, so dass danach die Steuersignale aus den einzelnen Paarungen zu einem gemeinsamen Steuerungssignal $u_s(t)$ für eine gemeinsame gesteuerte Stromquelle zusammengefasst werden. 98 symbolisiert eine zentrale Steuerung der Einheit 90 bzw. einer einzelnen Schaltung 10. Weiterhin ist mit der Kompensationssteuerung 98 eine Störkenngrößen-Ermittlungseinrichtung zum Ermitteln mindestens einer das Nebensprechen charakterisierenden Störkenngröße anhand eines ersten Signals (x[k]) und des Störsignals (y[k]) verbunden. Die zentrale Steuerung 98 kann auch das Abschalten und Zuschalten von Kompensationsschaltungen 10 bzw. adaptiven Filtern steuern. Bei der Adaption des adaptiven Filters bzw. der Kompensationseinrichtung können zwei Schritte hierbei unterschieden werden, nämlich zum einen die vergleichsweise schnelle Adaption bei nicht laufender Kompensation ("Kurzzeitadaption") und zum anderen die langsamere Adaption bzw. Nachführung der Adaption bei laufender Kompensation ("Langzeitadaption").

Die Störkenngrößen-Ermittlungseinrichtung liefert beispielsweise eine Schätzung der vorliegenden Neben-

sprechimpulsantwort $\tilde{h}[k]$ bzw. die zugehörige Übertragungsfunktion

$$\tilde{H}(F) = \sum_{k=-q_1}^{q_2} \tilde{h}[k]e^{-j2\pi kF} \quad , \quad -\frac{1}{2} < F < \frac{1}{2} \; .$$

Die Übertragungsfunktion eines T-Spaced Cancellers mit einstellbarer Verzögerungszeit $\tau$ lautet:

$$H(F) = \sum_{k=0}^{L-1} h[k]e^{-j2\pi(k+\tau/T)F} \quad , \quad -\frac{1}{2} < F < \frac{1}{2} \; .$$

Ein sinnvolles Kriterium zur Anpassung der Filterkoeffizienten wäre den mittleren quadratischen Fehler im Frequenzbereich zu minimieren, d.h. den Satz von Filterkoeffizienten $h[f]$ zu bestimmen, welcher den Wert des folgenden Integrals minimiert

$$\int_{-1/2}^{1/2} \left| \tilde{H}(F) - \sum_{k=0}^{L-1} h[k]e^{-j2\pi(k+\tau/T)F} \right|^2 dF \; .$$

Die Übertragungsfunktion eines FS-XTC bzw. eines FS-XTC-DSL in Polyphasen-Darstellung lautet:

$$H(F) = \sum_{\mu=0}^{M-1}\sum_{k=0}^{L_\mu-1} h_\mu[k]e^{-j2\pi(k+\mu/M)F} \quad , \quad -\frac{1}{2} < F < \frac{1}{2} \; .$$

Ein sinnvolles Kriterium zur Anpassung der Filterkoeffizienten wäre den mittleren quadratischen Fehler im Frequenzbereich zu minimieren, d.h. den Satz von Filterkoeffizienten $h_u[k]$ zu bestimmen, welcher den Wert des folgenden Integrals minimiert

$$\int_{-1/2}^{1/2} \left| \tilde{H}(F) - \sum_{\mu=0}^{M-1}\sum_{k=0}^{L_\mu-1} h_\mu[k]e^{-j2\pi(k+\mu/M)F} \right|^2 dF \; .$$

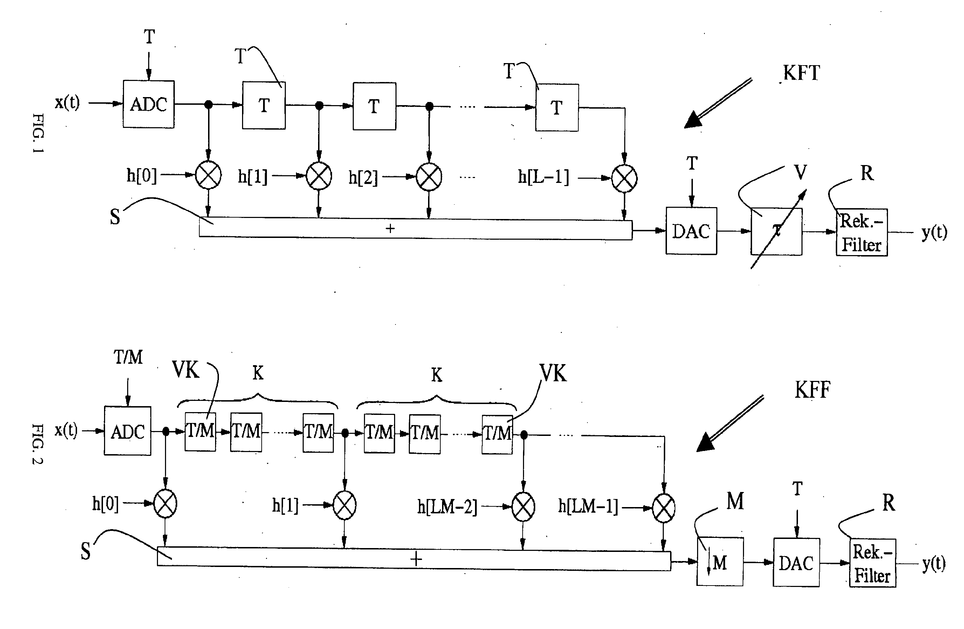

Die obige Darstellung beinhaltet die Bestimmung der Koeffizienten des FS-XTC und des FS-XTC-DSL. Beim FS-XTC haben alle Teilfilter gleiche Länge, d.h. $L_0 = L_1 = ... = L_{M-1}$.
Beim FS-XTC-DSL sind die $L_u$ unterschiedlich groß (die Teilfilter unterschiedlich lang).
Die anhand der **FIG. 1** bis **FIG. 4** nachfolgend beschriebenen Ausführungsformen der erfindungsgemäßen (digitalen) Kompensationsfilter/-schaltungen KFT, KFF können ohne Änderung der Systemkonzeption bei verschiedenen Systemen eingesetzt werden. Besonders vorteilhaft ist, dass lediglich eine Umkonfiguration beim Anwender erforderlich ist, welcher zwischen den Betriebsweisen, vorzugsweise zur Kompensation von Nahnebensprechen NEXT oder Fernnebensprechen FEXT, umschalten kann, so dass der Einsatz entsprechend anwenderspezifischer Anforderungen über verschiedene Systeme hinweg gewährleistet ist. Im Vergleich zum bekannten Stand der Technik erfordert die erfindungsgemäßen (digitalen) Kompensationsfilter/-schaltungen KFT, KFF keine parallele Ausführung von Systemteilen und erlauben mit überraschend geringem Aufwand vielfältige Einsatzmöglichkeiten, einschließlich der Möglichkeit zum Nachrüsten in bestehende Systeme sowie die flexible und kostengünstige Ausgestaltung. Insbesondere sind die erfindungsgemäßen Vorrichtungen transparent bezüglich der Übertragungsraten, Leitungscodes und anderer Übertragungsparameter und es werden keine Trainings- oder Synchronisationsverfahren benötigt.

Auch wenn nachfolgend die Ausgestaltungen der erfindungsgemäßen Lösung für die Fernnebensprechkompensation FEXT beschrieben ist, so ist der Einsatz des erfindungsgemäßen Konzepts auch bei NEXT (einzeln oder in Kombination) oder bei anderen Systeme und Anwenderanforderungen, beispielsweise Echokompensation oder Unterdrückung externer Störer wie Funkstörer, möglich. Dies ist darauf zurückzuführen, dass das erfindungsgemäße Konzept auf Modulbauweise und entsprechender Konfigurierbarkeit aufbaut und die einfache Anpassung an die jeweiligen Gegebenheiten und Einbindung ohne Änderung der Erfindung bzw. des Grundkonzepts erlaubt.

**FIG. 1** zeigt die Ausgestaltung des adaptiven Filters als digitales Kompensationsfilter KFT mit jeweils durch ein erstes Verzögerungsglied T mit der Verzögerungszeit T zeitlich getrennt angeordnete Filterkoeffizienten h[0], .. , h[L-1] und mit einstellbarer zusätzlicher Verzögerungszeit $\tau$. Die Einstellung der zusätzlichen Verzögerungszeit $\tau$ erfolgt vorzugsweise zusammen mit der Einstellung der Filterkoeffizienten h[0], .. , h[L-1] zur Kompensation des Fernnebensprechens FEXT, bei dem die Adernpaare 1, 1' nicht reziprok verkoppelt sind.

Die künstliche Verzögerung $\tau$ kann insbesondere durch ein einstellbares analoges oder digitales Verzögerungsglied V mit der Verzögerungszeit $\tau$, welches vor einem A/D- Wandler ADC (in **FIG. 1** nicht eingezeichnet), nach einem D/A-Wandler DAC oder zwischen A/D-Wandler ADC und D/A-Wandler DAC des Kompensationsfilters KFT angeordnet ist.

Alternativ kann die zusätzliche Verzögerungszeit $\tau$ auch durch ein Verzögern des A/D- oder des D/A-Wandlungsvorgangs des A/D-Wandlers ADC oder des D/A-Wandlers DAC oder durch ein Verzögern der digitalen Daten, d.h. durch Verwendung eines digitalen Verzögerungsgliedes, implementiert werden.

Die Größe der zusätzlichen Verzögerungszeit $\tau$ wird vorzugsweise gemeinsam mit den Koeffizienten h[k] des digitalen Kompensationsfilters KFT an die nachzubildende Übertragungsfunktion - welche durch eine Nebensprechidentifikationseinrichtung (im Einzelnen siehe hierzu die Europäische Patentanmeldung EP 1 775 851 A1 einer der Anmelderinnen, welche durch Bezugnahme hierauf zum Inhalt dieser Patentanmeldung gemacht wird) - angepasst, z.B. mit der Methode der kleinsten quadratischen Fehler.

Die in **FIG. 2** dargestellte zweite Ausführungsform der erfindungsgemäßen Vorrichtung zeigt einen Fractionally Spaced Crosstalk Canceller (FS-XTC) in seiner allgemeinsten Form. Das Eingangssignal x(t), welches ohne Beschränkung der Allgemeinheit auf das Frequenzband-1/(2T) bis 1/(2T) beschränkt ist, wird mit der Rate M/T A/D-gewandelt, d.h. es wird um einen ganzzahligen Faktor M überabgetastet.

Die Filterkoeffizienten h[k] sind jeweils durch K Verzögerungsglieder VK mit der Verzögerungszeit T/M zeitlich getrennt angeordnet. Das Ausgangssignal des Filters KFF wird schließlich um Faktor M heruntergetastet ("downsampling") und mit dem Takt 1/T D/Agewandelt. Alternativ kann das Downsampling um Faktor M entfallen, dafür muss jedoch der D/A-Wandler DAC mit einem um Faktor M höheren Takt (M/T) betrieben werden. Das optionale Rekonstruktionsfilter R ist entsprechend auf den höheren Takt anzupassen.

Für die folgenden Ausführungen wird K=1 angenommen, die Erweiterung auf K>1 ist jedoch direkt möglich. Zerlegt man das Filter h[k] in seine Polyphasen-Komponenten gemäß

$$h_\mu[k] = h[k \cdot M + \mu], \qquad k = 0, 1, \cdots, L-1, \qquad \mu = 0, 1, \cdots, M-1$$

so lässt dessen Übertragungsfunktion in Polyphasen-Darstellung gemäß

$$H(F) = \sum_{\mu=0}^{M-1} \sum_{k=0}^{L_\mu-1} h_\mu[k] e^{-j2\pi(k+\mu/M)F}, \qquad -\frac{1}{2} < F < \frac{1}{2}.$$

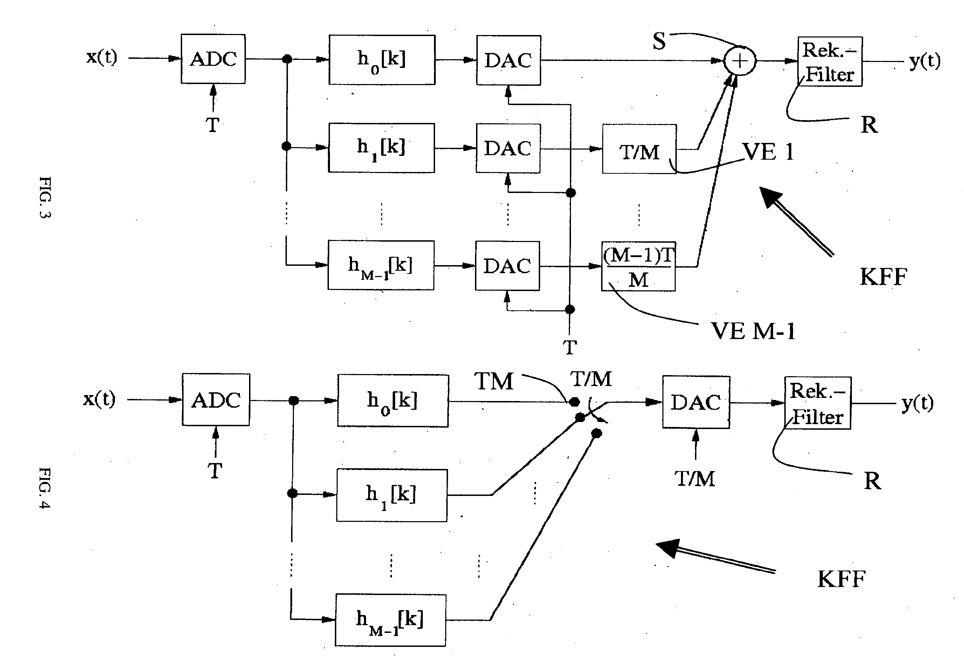

eine Realisierungsform zu, die ohne Überabtastung auskommt, wie dies in FIG. 3 dargestellt ist.

Die Einsparung der Überabtastung hat jedoch den Nachteil, dass M verschiedene D/A-Wandler DAC benötigt werden, deren Ausgangssignale in jedem Filterpfad individuell durch ein analoges oder digitales Verzögerungselement VE 1, ... , VE M-1 verzögert werden.

Alternativ kann die Verzögerung wiederum durch eine entsprechend verzögerte Signalausgabe im D/A-Wandler DAC erfolgen **(FIG. 3** nicht dargestellt).

In einer weiteren Ausgestaltung der Erfindung kann der Fractionally Spaced Crosstalk Canceller FS-XTC in einer alternativen Polyphasendarstellung gemäß **FIG.4** aufgebaut werden. Vorteil dieser Realisierungsform ist der Entfall der Notwendigkeit von M-fach D/A-Wandern DAC. Es wird lediglich ein D/A-Wandler DAC benötigt, der aber mit M/T getaktet ist.

Für die Kompensation von Nebensprechen ist die aufwandsgünstige Wahl K=1 und M=2 vorzuziehen. Das Kompensationsfilter KFF nach **FIG. 3** bzw. **FIG. 4** umfasst damit nur M=2 Teilfilter. Vorzugsweise wird ein Fractionally Spaced Crosstalk Canceller FS-XTC mit unterschiedlichen Längen der Teilfilter $h_\mu[k]$ ein sogenannter "Fractionally Spaced Crosstalk Canceller with Different Subfilter Lengths" FS-XTC-DSL benutzt. Für K=1 und M=2 ist es sinnvoll das zweite Teilfilter zu verkürzen. Da im Anwendungsfall der Kompensation von Nebensprechen für das zweite Teilfilter nur wenige (ca. 3-5) Taps (Filterkoeffizienten) von Nöten sind - ohne dass signifikante Verschlechterungen gegenüber einer Struktur mit voller Filterlänge für alle Teilfilter eintreten - sind fast 50% Aufwandsreduktion möglich.

Da das Eingangssignal des Fractionally Spaced Crosstalk Canceller FS-XTC um den Faktor M überabgetastet wird, stellt dieses ein Tiefpasssignal dar, welches prinzipiell zu einem Gewissen Grad prädizierbar ist. Die Filterkoeffizienten des Fractionally Spaced Crosstalk Canceller FS-XTC werden so an die durch die Identifikationseinheit vorgegebene Übertragungsfunktion angepasst, dass dessen Prädiktionsfähigkeiten möglichst gut ausgenutzt werden. Bei solch einer Wahl übersteigen die erzielbaren Kompensationsgewinne wesentlich die eines T-Spaced Cancellers (siehe **FIG. 6),** auch die eines T-Spaced Cancellers mit einstellbarer zusätzlicher Verzögerungszeit (siehe **FIG. 1).**

Zusätzlich zur inhärenten Prädiktion mittels des Fractionally Spaced Crosstalk Canceller FS-XTC/FS-XTC-DSL wird vorzugsweise das Signal x(t) einem Prädiktionsfilter (in **FIG. 3** und **FIG. 4** nicht dargestellt) zugeführt, dessen Ausgangssignal das neue Eingangssignal des Fractionally Spaced Crosstalk Canceller FS-XTC oder des Fractionally Spaced Crosstalk Canceller FS-XTC-DSL darstellt.

Im Systemmodell nach **FIG. 5** sind die Sendesignale, welche am fernen Ende eingespeist werden, nicht eingezeichnet. Die eigentlich beobachtbaren Leitungssignale umfassen diese Signale jedoch. Da die Sendesignale im Allgemeinen weder miteinander noch mit den empfangenen Signalen korreliert sind, ist diese vereinfachte Darstellung für die nachfolgend beschriebene Lösung jedoch zulässig. Aus den beobachtbaren Signalen $y_1[k]$ und $y_2[k]$ werden Schätzungen der Autokorrelationsfunktion durch Mittelung von $N_{sa}$ verschiedenen Abtastwert-Paaren folgendermaßen gebildet

$$\hat{\phi}_{y_1 y_1}[\kappa] = \frac{1}{N_{\mathrm{sa}}} \sum_{k=0}^{N_{\mathrm{sa}}-1} y_1[k + \kappa]\, y_1[k]$$

$$\hat{\phi}_{y_2 y_2}[\kappa] = \frac{1}{N_{\mathrm{sa}}} \sum_{k=0}^{N_{\mathrm{sa}}-1} y_2[k + \kappa]\, y_2[k]$$

In gleicher Weise erfolgt die **Schätzung der** Kreuzkorrelationsfunktion

$$\hat{\phi}_{y_1 y_2}[\kappa] = \frac{1}{N_{\mathrm{sa}}} \sum_{k=0}^{N_{\mathrm{sa}}-1} y_1[k + \kappa]\, y_2[k]$$

Aus den für verschiedene Werte von κ ermittelten Autokorrelations-funktionsschätzungen werden eine Hankel-Matrix gemäß

$$\hat{\tilde{\phi}}_{y_1 y_1} \overset{\text{def}}{=} \begin{bmatrix} \hat{\phi}_{y_1 y_1}[-(2q_1^{(\tilde{h}_{21})} + q_2^{(\tilde{h}_{21})})] & \cdots & \hat{\phi}_{y_1 y_1}[-q_1^{(\tilde{h}_{21})}] \\ \vdots & \ddots & \vdots \\ \hat{\phi}_{y_1 y_1}[-q_1^{(\tilde{h}_{21})} + q_1^{(\tilde{h}_{12})} + q_2^{(\tilde{h}_{12})} + 1] & \cdots & \hat{\phi}_{y_1 y_1}[q_1^{(\tilde{h}_{12})} + q_2^{(\tilde{h}_{12})} + q_2^{(\tilde{h}_{21})} + 1] \end{bmatrix}$$

und eine Toeplitz-Matrix gemäß

$$\hat{\phi}_{y_2 y_2} \overset{\text{def}}{=} \begin{bmatrix} \hat{\phi}_{y_2 y_2}[-q_1^{(\tilde{h}_{21})} + q_1^{(\tilde{h}_{12})} - q_2^{(\tilde{h}_{21})}] & \cdots & \hat{\phi}_{y_2 y_2}[-q_1^{(\tilde{h}_{21})} - (q_2^{(\tilde{h}_{12})} + q_2^{(\tilde{h}_{21})})] \\ \vdots & \ddots & \vdots \\ \hat{\phi}_{y_2 y_2}[2q_1^{(\tilde{h}_{12})} + q_2^{(\tilde{h}_{12})} + 1] & \cdots & \hat{\phi}_{y_2 y_2}[q_1^{(\tilde{h}_{12})} + 1] \end{bmatrix}$$

gebildet.

Die ganzzahlig (positiven) Parameter $q_{1/2}(\cdot)$ beschreiben dabei die Länge der zu schätzenden Impulsantworten in vektorieller Notation gemäß

$$\tilde{h}_{21} \overset{\text{def}}{=} \left[ \tilde{h}_{21}[-q_1^{(\tilde{h}_{21})}], \; \tilde{h}_{21}[-q_1^{(\tilde{h}_{21})} + 1], \; \ldots, \; \tilde{h}_{21}[q_2^{(\tilde{h}_{21})}] \right]^{\mathrm{T}}$$

$$\tilde{h}_{12} \overset{\text{def}}{=} \left[ \tilde{h}_{12}[-q_1^{(\tilde{h}_{12})}], \; \tilde{h}_{12}[-q_1^{(\tilde{h}_{12})} + 1], \; \ldots, \; \tilde{h}_{12}[q_2^{(\tilde{h}_{12})}] \right]^{\mathrm{T}}$$

Aus der geschätzten Kreuzkorrelationsfunktion wird der Vektor

$$\hat{\phi}_{y_1 y_2} \overset{\text{def}}{=} \left[ \hat{\phi}_{y_1 y_2}[-(q_1^{(\tilde{h}_{21})} + q_2^{(\tilde{h}_{21})})], \; \ldots, \; \hat{\phi}_{y_1 y_2}[q_1^{(\tilde{h}_{12})} + q_2^{(\tilde{h}_{12})} + 1] \right]^{\mathrm{T}}$$

gebildet.

Eine zuverlässige Schätzung der beiden Impulsantworten resultiert folgendermaßen

$$\begin{bmatrix} \hat{\tilde{h}}_{21} \\ \hat{\tilde{h}}_{12} \end{bmatrix} \overset{\text{def}}{=} \left( \begin{bmatrix} \hat{\tilde{\phi}}_{y_1 y_1} & \hat{\phi}_{y_2 y_2} \end{bmatrix} + \delta \cdot \mathbf{I} \right)^{-1} \hat{\phi}_{y_1 y_2}$$

Dabei bezeichnet der Operator (●)⁻¹ die Matrixinversion und I die Einheitsmatrix und die beiden geschätzten Impulsantworten dienen der Einstellung der Kompensationsfilter zur Kompensation des Fernnebensprechens FEXT, bei dem die Adernpaare 1, 1' nicht reziprok verkoppelt sind.

Mittels des positiven Parameters δ kann optional eine regularisierte Schätzung der beiden Impulsantworten erhalten werden.

Erfindungsgemäß dienen die beiden geschätzten Impulsantworten der Einstellung der digitalen Kompensationsfilter KFT eines T-Spaced Crosstalk Cancellers oder eines T-Spaced Crosstalk Cancellers mit einstellbarer Verzögerungszeit bzw. eines Fractionally Spaced Crosstalk Canceller.

**Patentansprüche**

1. Vorrichtung zur Kompensation (90) und Identifikation von Störsignalen in einem Nachrichtenübertragungssystem mit mindestens zwei Aderpaaren (1, 1') eines symmetrischen Leitungsbündels (91), mit

   • Anschlüssen (96, 96' und 97, 97') zum beidseitigen Anschluss der Signalleitungen der Adernpaare (1, 1'),
   • den Anschlüssen (96, 96' und 97, 97') nachgeordnete Totzeitglieder (94, 94' und 95, 95'),
   • mindestens einer den Totzeitgliedern (94, 94' und 95, 95') nachgeordneten Kompensationsschaltung (10) mit einem Störsignaleingang (11) und einer Kompensationssignalquelle, welche ein Kompensationssignal in das jeweilige Aderpaar (1, 1') einspeist,
   • einer Störkenngrößen-Ermittlungseinrichtung zum Ermitteln mindestens einer das Nebensprechen charakterisierenden Störkenngröße anhand der Signale der beteiligten Adernpaare (1, 1') und
   • einer mit der Störkenngrößen-Ermittlungseinrichtung verbundenen Kompensationssteuerung (98), welche die Einstellung von Filterkoeffizienten (h[0], .. , h[L-1]) eines adaptiven Filters und die Kompensationssignalquelle steuert,

   **dadurch gekennzeichnet, dass** zur Verzögerung des gefilterten Signals dem adaptiven Filter, welches als digitales Kompensationsfilter (KFT) mit jeweils durch ein erstes Verzögerungsglied (T) mit der Verzögerungszeit T zeitlich getrennt angeordneten Filterkoeffizienten (h[0], .. , h[L-1]) ausgestaltet ist, ein zusätzliches Verzögerungsglied mit einstellbarer Verzögerungszeit τ nach oder vorgeschaltet ist und dass die Einstellung der zusätzlichen Verzögerungszeit τ zusammen mit der Einstellung von Filterkoeffizienten (h[0], .. , h[L-1]) zur Kompensation des Fernnebensprechens FEXT, bei dem die Adernpaare (1, 1') nicht reziprok verkoppelt sind, erfolgt.

2. Vorrichtung nach Anspruch 1, **dadurch gekennzeichnet, dass** ein analoges oder digitales zweites Verzögerungsglied (V) vorgesehen ist, welches vor einem A/D-Wandler (ADC), nach einem D/A-Wandler (DAC) oder zwischen A/D-Wandler (ADC) und D/A-Wandler (DAC) des Kompensationsfilters (KFT) angeordnet ist.

3. Vorrichtung nach Anspruch 1, **dadurch gekennzeichnet, dass** die zusätzliche Verzögerungszeit τ durch ein Verzögern des A/D- oder des D/A-Wandlungsvorgangs des A/D-Wandlers (ADC) oder des D/A-Wandlers (DAC) oder durch ein Verzögern der digitalen Daten implementiert wird und dass die zusätzliche Verzögerungszeit τ ein Bruchteil des Abtasttakts T ist.

4. Vorrichtung nach Anspruch 1, **dadurch gekennzeichnet, dass** zur Erzeugung von mehreren Kompensationssignalen bei einem N x N Kompensationssystem N x (N-1) A/D-Wandler (ADC) und D/A-Wandler (DAC) vorgesehen sind.

5. Vorrichtung nach Anspruch 1, **dadurch gekennzeichnet, dass** die Störkenngrößen-Ermittlungseinrichtung die Größe der zusätzlichen Verzögerungszeit τ nach Maßgabe der Methode der kleinsten quadratischen Fehler ermittelt und dass das mit dem A/D-Wandler (ADC) abgetastete, im Takt 1/T digital gefilterte und im Takt 1/T im D/A-Wandler (DAC) gewandelte Eingangssignal x(t) in einem dem D/A-Wandler (DAC) nachgeordneten Rekonstruktionsfilter (R) entzerrt/geglättet wird.

6. Vorrichtung zur Kompensation (90) und Identifikation von Störsignalen in einem Nachrichtenübertragungssystem mit mindestens zwei Aderpaaren (1, 1') eines symmetrischen Leitungsbündels (91), mit

   • Anschlüssen (96, 96' und 97, 97') zum beidseitigen Anschluss der Signalleitungen der Adernpaare (1, 1'),
   • den Anschlüssen (96, 96' und 97, 97') nachgeordnete Totzeitglieder (94, 94' und 95, 95'),
   • mindestens einer den Totzeitgliedern (94, 94' und 95, 95') nachgeordneten Kompensationsschaltung (10) mit einem Störsignaleingang (11) und einer Kompensationssignalquelle, welche ein Kompensationssignal in das jeweilige Adernpaar (1, 1') einspeist,

• einer Störkenngrößen-Ermittlungseinrichtung zum Ermitteln mindestens einer das Nebensprechen charakterisierenden Störkenngröße anhand der Signale der beteiligten Adernpaare (1, 1') und

• einer mit der Störkenngrößen-Ermittlungseinrichtung verbundenen Kompensationssteuerung (98), welche die Einstellung von Filterkoeffizienten (h[0], .. , h[LM-1]) eines adaptiven Filters und die Kompensationssignalquelle steuert, **dadurch gekennzeichnet, dass** zur Kompensation des Fernnebensprechens FEXT, bei dem die Adernpaare (1, 1') nicht reziprok verkoppelt sind, das adaptive Filter als digitales Kompensationsfilter (KFF) ausgestaltet ist, dass das Eingangssignal x(t) in einem A/D-Wandler (ADC) mit der Rate M/T A/D-gewandelt wird, dass die Filterkoeffizienten ($h_\mu$[0], .. , $h_\mu$[LM-1]) jeweils durch K Verzögerungsglieder (VK) mit der Verzögerungszeit T/M zeitlich getrennt angeordnet sind und dass das Ausgangssignal des Kompensationsfilters (KFF) in einer Abtasteinrichtung (M) um den Faktor M heruntergetastet und in einem D/A-Wandler (DAC) mit dem Takt 1/T D/Agewandelt wird oder das Ausgangssignal des Kompensationsfilters (KFF) im D/A-Wandler (DAC) mit dem Takt M/T D/A-gewandelt wird.

7. Vorrichtung mit dem Oberbegriff nach Anspruch 6, **dadurch gekennzeichnet, dass** zur Kompensation des Fernnebensprechens FEXT, bei dem die Adernpaare (1, 1') nicht reziprok verkoppelt sind, das adaptive Filter als digitales Kompensationsfilter (KFF) mit M parallelen Filterpfade ausgestaltet ist, dass das Eingangssignal x(t) in einem A/D-Wandler (ADC) mit dem Takt T A/D-gewandelt wird, dass in den M parallelen Filterpfaden jeweils die mit den Filterkoeffizienten ($h_\mu$[0], .. , $h_\mu$[M-1]) verknüpften Signale in einem D/A-Wandler (DAC) mit dem Takt 1/T D/A-gewandelt werden, deren Ausgangssignale ab dem zweiten Filterpfad individuell durch jeweils ein Verzögerungselement (VE 1, ... VE M-1) verzögert oder am jeweiligen D/A-Wandler (DAC) verzögert ausgegeben werden und dass die M Filterpfade einem Summierer (S) zugeführt werden.

8. Vorrichtung mit dem Oberbegriff nach Anspruch 6, **dadurch gekennzeichnet, dass** zur Kompensation des Fernnebensprechens FEXT, bei dem die Adernpaare (1, 1') nicht reziprok verkoppelt sind, das adaptive Filter als digitales Kompensationsfilter (KFF) mit M parallelen Filterpfade ausgestaltet ist, dass das Eingangssignal x(t) in einem A/D-Wandler (ADC) mit dem Takt T A/D-gewandelt wird und dass jeweils eines der im Teilfilter mit den Filterkoeffizienten ($h_\mu$[0], .. , $h_\mu$[M-1]) verknüpften Signale über den jeweiligen Abgriff eines Vielfachschalters (TM) einem D/A-Wandler (DAC) zugeführt und dort mit dem Takt T/M D/A-gewandelt wird.

9. Vorrichtung nach einem der Ansprüche 6 bis 8, **dadurch gekennzeichnet, dass** das Ausgangssignal des D/A-Wandlers (DAC) in einem dem D/A-Wandler (DAC) nachgeordneten Rekonstruktionsfilter (R) entzerrt/geglättet wird.

10. Vorrichtung nach einem der Ansprüche 6 bis 8, **dadurch gekennzeichnet, dass** das Eingangssignal x(t) auf das Frequenzband -1/(2T) bis 1/(2T) beschränkt ist.

11. Vorrichtung nach einem der Ansprüche 7 bis 8, **dadurch gekennzeichnet, dass** die Teilfilter des digitalen Kompensationsfilters (KFF) unterschiedliche Längen aufweisen.

12. Vorrichtung nach einem der Ansprüche 7 bis 8, **dadurch gekennzeichnet, dass** dem digitalen Kompensationsfilter (KFF) ein Prädiktionsfilter vorgeschaltet ist, dessen Ausgangssignal das neue Eingangssignal x(t) des digitalen Kompensationsfilters (KFF) ist.

13. Vorrichtung nach Ansprüche 1 oder 6, **dadurch gekennzeichnet, dass** die Kompensationssteuerung (98) das Abschalten und Zuschalten von Kompensationsschaltungen (10) steuert.

14. Verfahren zur Kompensation und Identifikation von Störsignalen in einem Nachrichtenübertragungssystem mit einer mit mindestens zwei Adernpaaren (1, 1') eines symmetrischen Leitungsbündels (91) in Verbindung stehenden Vorrichtung, welche Totzeitglieder (94, 94' und 95, 95'), eine den Totzeitgliedern (94, 94' und 95, 95') nachgeordnete Kompensationsschaltung (10) mit einem Störsignaleingang (11) und einer Kompensationssignalquelle, eine Störkenngrößen-Ermittlungseinrichtung und eine mit der Störkenngrößen-Ermittlungseinrichtung verbundene Kompensationssteuerung (98) aufweist, bei dem

• die Auto- und Kreuzkorrelationsfunktionen AKF, KKF der Signale auf allen Adernpaaren (1, 1') geschätzt werden,

• eine Adaption und Einstellung von Filterkoeffizienten eines als digitales Kompensationsfilter (KFT), welches mit jeweils durch ein erstes Verzögerungsglied (T) mit der Verzögerungszeit T zeitlich getrennt angeordnete

Filterkoeffizienten ($h_\mu[0]$, .. , $h_\mu[L-1]$) und mit einstellbarer zusätzlicher Verzögerungszeit $\tau$ oder bei dem das Eingangssignal x(t) in einem A/D-Wandler (ADC) mit der Rate M/T A/D-gewandelt wird und die Filterkoeffizienten ($h_\mu[0]$, .. , $h_\mu[LM-1]$) jeweils durch K Verzögerungsglieder (VK) mit der Verzögerungszeit T/M zeitlich getrennt angeordnet sind oder bei dem in den M parallelen Filterpfaden jeweils die mit den Filterkoeffizienten ($h_\mu[0]$, .. , $h_\mu[M-1]$) verknüpften Signale in einem D/A-Wandler (DAC) mit dem Takt 1/T D/A-gewandelt werden, deren Ausgangssignale ab dem zweiten Filterpfad individuell durch jeweils ein Verzögerungselement (VE 1, ... VE M-1) verzögert oder am jeweiligen D/A-Wandler (DAC) verzögert ausgegeben werden oder bei dem das Eingangssignal x(t) in einem A/D-Wandler (ADC) mit dem Takt T A/D-gewandelt wird und jeweils eines der im Teilfilter mit dem Filterkoeffizienten ($h_\mu[0]$, .. $h_\mu[M-1]$) verknüpften Signale über den jeweiligen Abgriff eines Vielfachschalters (TM) einem D/A-Wandler (DAC) zugeführt und dort mit dem Takt T/M D/A-gewandelt wird, durch Anordnung der geschätzten Korrelationswerte in entsprechenden Hankel- und Töplitzmatrizen erfolgt,
• eine Berechnung der näherungsweisen Nebensprechimpulsantwort durchgeführt wird,
• das Zuschalten der Kompensationsfilter (KFT, KFF) erfolgt,

**dadurch gekennzeichnet, dass** aus der geschätzten Kreuzkorrelationsfunktion der Vektor

$$\hat{\phi}_{y_1 y_2} \overset{\text{def}}{=} \left[ \grave{\phi}_{y_1 y_2}[-(q_1^{(\tilde{h}_{21})} + q_2^{(\tilde{h}_{21})})] . \ldots , \grave{\phi}_{y_1 y_2}[q_1^{(\tilde{h}_{12})} + q_2^{(\tilde{h}_{12})} + 1] \right]^{\mathrm{T}}$$

gebildet wird und dass die beiden Impulsantworten wie folgt geschätzt werden:

$$\begin{bmatrix} \hat{\tilde{h}}_{21} \\ \hat{\tilde{h}}_{12} \end{bmatrix} \overset{\text{def}}{=} \cdot \left( \begin{bmatrix} \hat{\tilde{\phi}}_{y_1 y_1} & \hat{\phi}_{y_2 y_2} \end{bmatrix} + \delta \cdot \mathbf{I} \right)^{-1} \hat{\phi}_{y_1 y_2}$$

,

wobei der Operator $(\bullet)^{-1}$ die Matrixinversion und I die Einheitsmatrix bezeichnet und die beiden geschätzten Impulsantworten der Einstellung der Kompensationsfilter (KFT, KFF) zur Kompensation des Fernnebensprechens FEXT, bei dem die Adernpaare (1, 1') nicht reziprok verkoppelt sind, dienen.

15. Vorrichtung nach Anspruch 14, **dadurch gekennzeichnet, dass** mittels des positiven Parameters $\delta$ eine regularisierte Schätzung der beiden Impulsantworten erhalten wird.

**Claims**

1. A device for cancellation (90) and identification of interfering signals in a communication system with at least two pairs of wires (1, 1') of a balanced line bundle (91), comprising:

   • connections (96, 96' and 97, 97') to connect the signal lines on both sides of the pairs (1,1'),
   • dead time elements (94, 94' and 95, 95') subordinated to said connections (96, 96' and 97, 97'),
   • at least one cancellation circuit (10), subordinated to said dead time elements (94, 94' and 95, 95'), having an interfering signal input (11) and a cancellation signal source, which feeds a cancellation signal into the respective wire pair (1, 1'),
   • an interference characteristic detection device for determining at least one interference signal parameter characterizing the crosstalk interference by means of the signals of the involved wire pairs (1, 1'), and
   • a cancellation control unit (98) connected to said interference characteristic detection device, which controls the setting of filter coefficients (h[0], ..., h[L-1]) of an adaptive filter and the cancellation signal source,

   **wherein** for the delay of the filtered signal an additional delay element with adjustable delay time $\tau$ is placed in front of or behind said adaptive filter, which is a digital cancellation filter (KFT) with first delay elements (T) with delay time T and filter coefficients (h[0], .. , h[L-1]) with a tap spacing of T, and that the adjustment of the additional delay time $\tau$ is done jointly with the adaptation of the filter coefficients (h[0], .. , h[L-1]) for cancellation of FEXT, where wire pairs (1, 1') are non-reciprocally coupled.

2.  The device according to claim 1, **wherein** an analog or digital second delay element (V) is employed, which is placed before the A/D converter (ADC), after the D/A converter (DAC) or between the A/D converter (ADC) and the D/A converter (DAC) of the cancellation filter (KFT).

3.  The device according to claim 1, **wherein** the additional delay time $\tau$ is implemented by delaying the A/D or the D/A conversion process of the A/D converter (ADC) or the D/A converter (DAC) or by delaying the digital data, and that the additional delay time $\tau$ is a fraction of sampling interval T.

4.  The device according to claim 1, **wherein** for the generation of several cancellation signals for a N$\times$N cancellation system N$\times$(N-1) A/D converter (ADC) and D/A converter (DAC) are provided.

5.  The device according to claim 1, **wherein** the interference characteristic detection device determines the size of the additional delay time $\tau$ by means of the method of least squared errors, and that the input signal x(t), which first is A/D-converted by an A/D converter (ADC), digitally filtered with rate 1/T, and D/A-converted by a D/A converter (DAC) with rate 1/T, is finally equalized/smoothed by a reconstruction filter (R) subordinated to the D/A converter (DAC).

6.  A device for cancellation (90) and identification of interfering signals in a communication system with at least two pairs of wires (1, 1') of a balanced line bundle (91), comprising:

    • connections (96, 96' and 97, 97') to connect the signal lines on both sides of said pairs (1, 1'),
    • dead time elements (94, 94' and 95, 95') subordinated to said connections (96, 96' and 97, 97'),
    • at least one cancellation circuit (10), subordinated to said dead time elements (94, 94' and 95, 95'), having an interfering signal input (11) and a cancellation signal source, which feeds a cancellation signal into the respective wire pair (1, 1'),
    • an interference characteristic detection device for determining at least one interference signal parameter characterizing the crosstalk interference by means of the signals of the involved wire pairs (1, 1'), and
    • a cancellation control unit (98) connected to said interference characteristic detection device, which controls the adaptation of the filter coefficients (h[0], ... , h[L-1]) of an adaptive filter and the cancellation signal source,

    wherein for the cancellation of FEXT, where wire pairs (1, 1') are non-reciprocally coupled, the adaptive filter is built by a digital cancellation filter (KFF), and that the input signal x(t) is A/D-converted by an A/D converter (ADC) with rate M/T, that each of the filter coefficients ($h_{\mu}[0], .. , h_{\mu}[LM-1]$) are (temporarily) separated by K delay elements (VK) each with a delay time of T/M, and that the output signal of the cancellation filter (KFF) is down-sampled by a sampling device (M) by factor M and D/A-converted by a D/A converter with rate 1/T or alternatively the output signal of the cancellation filter (KFF) is D/A-converted by a D/A converter (DAC) with rate M/T.

7.  A device according to the preamble of claim 6, wherein for the cancellation of FEXT, where wire pairs (1, 1') are non-reciprocally coupled, the adaptive filter is built by a digital cancellation filter (KFF) with M parallel filter paths, that the input signal x(t) is A/D-converted by an A/D converter (ADC) with rate T, that in each of the M parallel filter paths the signals corresponding to the respective filter coefficients ($h_{\mu}[0], .. , h_{\mu}[M-1]$) are D/A-converted by a D/A converter (DAC) with rate 1/T, whose output signals, from the second filter path on, are individually delayed by a delay element (VE 1, ... VE M-1) or are output by the respective D/A converter (DAC) with the corresponding delay, and that the M filter paths are fed to an adder (S).

8.  A device according to the preamble of claim 6, **wherein** for the cancellation of FEXT, where wire pairs (1, 1') are non-reciprocally coupled, the adaptive filter is built by a digital cancellation filter (KFF) with M parallel filter paths, that the input signal x(t) is A/D-converted by an A/D converter (ADC) with rate 1/T, and that each of the signals, which are linked within the subfilter with the filter coefficients ($h_{\mu}[0], .. , h_{\mu}[M-1]$), is fed via a selector switch (TM) to a D/A converter (DAC) and is D/A-converted with rate M/T.

9.  The device according to one of the claims from 6 to 8, **wherein** the output signal of the D/A converter (DAC) is equalized/smoothed by a reconstruction filter (R) subordinated to the D/A converter (DAC).

10. The device according to one of the claims from 6 to 8, **wherein** that the input signal x(t) is limited to the frequency band from -1/(2T) to 1/(2T).

11. The device according to one of the claims from 7 to 8, **wherein** the subfilters of the digital cancellation filter (KFF) are of different lengths.

12. The device according to one of the claims from 7 to 8, **wherein** a prediction filter is added in front of the digital cancellation filter (KFF), whose output signal is the new input signal x(t) of the digital cancellation filter (KFF).

13. The device according to claims 1 or 6, **wherein** the cancellation control unit (98) controls switching off and on of cancellation circuits (10).

14. A method for cancellation for and identification of interfering signals in a communication system with a device connected to at least two wire pairs (1, 1') of a balanced line bundle (91), which comprises dead time elements (94, 94' and 95, 95'), a cancellation circuit (10), subordinated to said dead time elements (94, 94' and 95, 95') having an interfering signal input (11) and a cancellation signal source, an interference characteristic detection device and a cancellation control unit (98) connected to said interference characteristic detection device, **whereby**

• auto and cross-correlation functions AKF, KKF of the signals of all wire pairs (1, 1') are estimated,
• an adaptation and adjustment of filter coefficients of a digital cancellation filter (KFT), with first delay elements (T) with delay time T and filter coefficients ($h_\mu[0],..,h_\mu[L-1]$) with a tap spacing of T, and with additional delay time $\tau$, or that the input signal x(t) is A/D-converted by an A/D converter (ADC) with rate M/T, that each of the filter coefficients ($h_\mu[0], .., h_\mu[LM-1]$) are (temporarily) separated by K delay elements (VK) each with a delay time of T/M, or that in each of the M parallel filter paths the signals corresponding to the respective filter coefficients ($h_\mu[0], .., h_\mu[M-1]$) are D/A-converted by a D/A converter (DAC) with rate 1/T, whose output signals, from the second filter path on, are individually delayed by a delay element (VE 1, ... VE M-1) or are output by the respective D/A converter (DAC) with the corresponding delay, or that the input signal x(t) is A/D-converted by an A/D converter (ADC) with rate 1/T, and that each of the signals, which are linked within the subfilter with the filter coefficients ($h_\mu[0], .., h_\mu[M-1]$), is fed via a selector switch (TM) to a D/A converter (DAC) and is D/A-converted with rate M/T, is carried out by arranging the estimated correlation values in suitable Hankel and Toeplitz matrices,
• a calculation of the approximate crosstalk impulse response is carried out, and
• switching on/off of the cancellation filter (KFT, KFF) is employed, and wherein from the estimated cross-correlation function the vector

$$\hat{\phi}_{y_1 y_2} \stackrel{\text{def}}{=} \left[ \hat{\phi}_{y_1 y_2}[-(q_1^{(\tilde{h}_{21})} + q_2^{(\tilde{h}_{21})})], \; \dots \; , \hat{\phi}_{y_1 y_2}[q_1^{(\tilde{h}_{12})} + q_2^{(\tilde{h}_{12})} + 1] \right]^{T}$$

is formed and wherein both impulse responses are estimated, as follows,

$$\begin{bmatrix} \hat{\tilde{h}}_{21} \\ \hat{\tilde{h}}_{12} \end{bmatrix} \stackrel{\text{def}}{=} \left( \begin{bmatrix} \hat{\tilde{\phi}}_{y_1 y_1} & \hat{\phi}_{y_2 y_2} \end{bmatrix} + \delta \cdot \mathbf{I} \right)^{-1} \hat{\phi}_{y_1 y_2}$$

,

where operator ($\bullet$)$^{-1}$ denotes matrix inversion and I the identity matrix, and both estimated impulse responses are employed for adjusting the cancellation filters (KFT, KFF) for cancellation of FEXT, where wire pairs are non-reciprocally coupled.

15. The method according to claim 14, wherein by means of the positive parameter $\delta$ a regularized estimate of both impulse responses is obtained.

**Revendications**

1. Dispositif de compensation (90) et l'identification des signaux d'interférence dans un système de communication ayant au moins deux paires (1, 1') d'un faisceau de ligne équilibrée (91), avec :

   - des terminaux (96, 96' et 97, 97') pour le raccordement des deux côtés des lignes de signaux des paires (1, 1').
   - d'éléments retardateur (94, 94' et 95, 95') en aval les terminaux (96, 96' et 97, 97'),
   - au moins un circuit de compensation (10) en aval les éléments retardateur (94, 94' et 95, 95')) ayant une entrée d'un signal d'interférence (11) et une source de signal de compensation, qui alimente un signal de compensation dans la paire respective de conducteurs (1, 1'),
   - un moyen détection de grandeurs caractéristiques pour détecter au moins d'un signal caractérisant d'interférence sur la base des signaux des paires impliqué (1, 1') et
   - un moyen de commande de compensation (98) reliés avec le moyen détection de grandeurs caractéristiques qui commande le réglage de coefficients de filtre (h [0]. .., h [L-1]) d'un filtre adaptatif et la source de signal de compensation, **caractérisé en ce que** pour le retard du signal filtré un élément à retard supplémentaire avec un temps de retard réglable τ est disposé en aval ou en amont le filtre adaptatif, qui est configurée comme un filtre de compensation numérique (KFT) avec des coefficients de filtrage (h [0], .., h[L-1]), chacune disposés séparément par un premier élément de retard (T) avec le temps de retard T et que pour compenser la télédiaphonie FEXT, dans laquelle les paires (1, 1') ne sont pas réciproque couplé, le réglage du temps supplémentaire de retard τ a lieu avec le réglage de coefficients de filtre (h [0]..., h [L-1]).

2. Dispositif selon la revendication 1, **caractérisé en ce qu'un** deuxième élément (V) à retard analogique ou numérique est fourni, qui est disposé en amont d'un convertisseur analogique/numérique (ADC), ou en aval un convertisseur numérique/analogique (DAC) ou entre le convertisseur A/D analogique/numérique (ADC) et le convertisseur numérique/analogique (DAC) du filtre de compensation (KFT).

3. Dispositif selon la revendication 1, **caractérisé en ce que** la supplémentaire augmentation du temps de retard τ est mise en oeuvre par retarder l'opération de conversion A/D et D/A du convertisseur analogique/numérique (ADC) ou du convertisseur numérique/analogique (DAC) ou par retarder les données numériques, et que le retard de temps τ est une fraction de T de l'horloge d'échantillonnage.

4. Dispositif selon la revendication 1, **caractérisé en ce que** pour générer une pluralité de signaux de compensation dans un système de compensation N de N, N x (N-1) convertisseur analogique/numérique (ADC) et N x (N-1) convertisseur numérique/analogique (DAC) sont prévus.

5. Dispositif selon la revendication 1, **caractérisé en ce que** le moyen détection de grandeurs caractéristiques détermine la taille de l'augmentation du temps de retard τ conformément à la méthode du carré de l'erreur plus petite, et que le signal d'entrée x (t) échantillonné avec le convertisseur analogique/numérique (ADC). filtrée numériquement avec un cycle de 1/T et conversée avec le temps 1/T dans le convertisseur numérique/analogique (DAC) est redressée/lissée dans un filtre de reconstruction (R) en aval du convertisseur numérique / analogique (DAC).

6. Dispositif de compensation (90) et l'identification des signaux d'interférence dans un système de communication ayant au moins deux paires (1, 1') d'un faisceau de ligne équilibrée (91), avec :

   - des terminaux (96, 96' et 97, 97') pour le raccordement des deux côtés des lignes de signaux des paires (1, 1'),
   - d'éléments retardateur (94, 94' et 95, 95')) en aval les terminaux (96, 96' et 97, 97'),
   - au moins un circuit de compensation (10) en aval les éléments retardateur (94, 94' et 95, 95')) ayant une entrée d'un signal d'interférence (11) et une source de signal de compensation, qui alimente un signal de compensation dans la paire respective de conducteurs (1, 1'),
   - un moyen détection de grandeurs caractéristiques pour détecter au moins d'un signal caractérisant d'interférence sur la base des signaux des paires impliqué (1, 1') et
   - un moyen de commande de compensation (98) reliés avec le moyen détection de grandeurs caractéristiques qui commande le réglage de coefficients de filtre ((h$_\mu$[0], .. , h$_\mu$[LM-1]) d'un filtre adaptatif et la source de signal de compensation, **caractérisé en ce que** pour compenser la télédiaphonie FEXT, dans lequel les paires (1, 1') ne sont pas réciproque couplé, le filtre adaptatif est configuré comme un filtre numérique de compensation (KFF), que le signal d'entrée x (t) est conversée à la fréquence M/TA dans un convertisseur A/D analogique/numérique (ADC), que les coefficients de filtre (h$_\mu$[0], .. , h$_\mu$[LM-1]) sont séparés dans le temps par K des éléments de retard (UK) avec le temps de retard T/M et que le signal de sortie du filtre de compensation (KFF) est sous-échantillonnée par un facteur M dans un moyen d'échantillonnage (M) et par l'opération de conversion D/A est conversée dans un convertisseur numérique/analogique (DAC) avec le temps 1/T ou le signal de sortie du filtre de compensation (KFF) par l'opération de conversion D/A est conversée dans un convertisseur numérique/analogique (DAC) avec le temps M/T.

**7.** Dispositif selon le préambule de la revendication 6, **caractérisé en ce que** pour compenser la télédiaphonie FEXT, dans laquelle les paires (1, 1') ne sont pas réciproque couplé, le filtre adaptatif est configuré comme un filtre numérique de compensation (KFF) avec M chemins de filtre parallèle que le signal d'entrée x (t) est conversée avec le temps T dans un convertisseur analogique/numérique (ADC), que dans les chemins de filtre parallèle M, respectivement en un convertisseur numérique/analogique (DAC) les coefficients de filtre ($h_\mu[0]$, .. , $h_\mu[LM-1]$) combinés avec une signaux sont convertis avec le temps 1/T par l'opération de conversion D/A, du quelles signaux de sortie à partir du la deuxième chemin de filtre sont retardée individuellement par chaque élément de retard (VE 1, ... VE M-1) ou sont à émettre en sortie au convertisseur numérique/analogique (DAC) respectivement et que les M chemins de filtres sont fournis à un dispositif de sommation (S).

**8.** Dispositif selon le préambule de la revendication 6, **caractérisé en ce que** pour compenser la télédiaphonie FEXT, dans laquelle les paires (1, 1') ne sont pas réciproque couplé, le filtre adaptatif est configuré comme un filtre numérique de compensation (KFF) avec M chemins de filtre parallèle, que le signal d'entrée x (t) est conversée avec le temps T dans un convertisseur analogique/numérique (ADC) par l'opération de conversion A/D, et que chacun signaux combinés avec les coefficients de filtre ($h_\mu[0]$, .. , $h_\mu[M-1]$) dans un des sous-filtres est fournis sur la prise respective d'un multi-switch (TM) à un convertisseur numérique/analogique (DAC) et y conversée avec le temps T/M par l'opération de conversion D/A.

**9.** Dispositif selon l'une des revendications 6 à 8, **caractérisé en ce que** le signal de sortie du convertisseur numérique/analogique (DAC) est redressée /lissée dans un filtre de reconstruction (R) en aval du convertisseur numérique/analogique (DAC).

**10.** Dispositif selon l'une des revendications 6 à 8, **caractérisé en ce que** le signal d'entrée x (t) est limitée au la bande de fréquence de -1/(2T) à 1/(2T).

**11.** Dispositif selon l'une des revendications 7 à 8, **caractérisé en ce que** les sous-filtres du filtre de compensation numérique (KFF) ont des longueurs différentes.

**12.** Dispositif selon l'une des revendications 7 à 8, **caractérisé en ce que** en amont le filtre de compensation numérique (KFF) un filtre de prédiction est relié, le signal de sortie est le nouveau signal d'entrée x (t) du filtre numérique de compensation (KFF).

**13.** Dispositif selon les revendications 1 ou 6, **caractérisé en ce que** le moyen de commande de compensation (98) contrôle l'arrêt et la mise en marche des circuits de compensation (10).

**14.** Procédé pour compenser (90) et l'identification des signaux d'interférence dans un système de communication ayant un dispositif qui est relié au moins avec deux paires (1, 1') d'un faisceau de ligne équilibrée (91), ayant d'éléments retardateur (94, 94' et 95, 95'), ayant un circuit de compensation (10) en aval des éléments retardateur (94, 94' et 95, 95') ayant une entrée d'un signal d'interférence (11) et une source de signal de compensation, ayant un moyen détection de grandeurs caractéristiques et un moyen de commande de compensation (98) reliés avec le moyen détection de grandeurs caractéristiques, dans lequel

- la fonction d'autocorrélation et la corrélation croisée ACF, CCF des signaux sur toutes les paires (1, 1') peut être estimée,
- une adaptation et d'ajustement des coefficients de filtre d'un filtre numérique de compensation (KFT) est fait par disposition les valeurs de corrélation estimés dans une correspondante matrice de Hankel et une correspondante matrice de Toeplitz, le filtre numérique de compensation (KFT) est converti par des coefficients de filtrage ($h_\mu[0]$, .. , $h_\mu[L-1]$) chacune disposés séparément temporellement par un premier élément de retard (T) avec le temps de retard T de temps et un élément à retard supplémentaire avec un temps de retard réglable $\tau$ ou dans lequel le signal d'entrée x (t) est converti à la fréquence M/TA dans un convertisseur analogique/numérique (ADC) par l'opération de conversion A/D et les coefficients de filtrage ($h_\mu[0]$, .. , $h_\mu[L-1]$) sont séparés dans le temps par K des éléments de retard (UK) avec le temps de retard T/M ou dans lequel dans des M chemins de filtre parallèle des signaux sont combinés avec les coefficients de filtre ($h_\mu[0]$, .. , $h_\mu[LM-1]$) et

conversée avec le temps T dans un convertisseur numérique/analogique (DAC) par l'opération de conversion D/A, du quelles signaux de sortie à partir du la deuxième chemin de filtre sont retardée individuellement par chaque élément de retard (VE 1, ... VE M-1) ou sont à émettre en sortie au convertisseur numérique/analogique (DAC) respectivement ou dans lequel le signal d'entrée x (t) est conversée avec le temps T dans un convertisseur analogique/numérique (ADC) par l'opération de conversion A/D et chacun signaux combinés avec les coefficients de filtre ($h_\mu[0]$, .. , $h_\mu[M-1]$) dans un des sous-filtres est fournis sur la prise respective d'un multi-switch (TM) à un convertisseur numérique/analogique (DAC) et y conversée avec le temps T/M par l'opération de conversion D/A,

- un calcul de la réponse impulsionnelle de diaphonie approximative est effectué,
- la mise en marche du filtre de compensation (KFT, KFF) est faite,

**caractérisé en ce que** à partir de la fonction de corrélation croisée un vecteur

$$\hat{\phi}_{y_1 y_2} \stackrel{\text{def}}{=} \left[ \hat{\phi}_{y_1 y_2}[-(q_1^{(\hat{h}_{21})} + q_2^{(\hat{h}_{21})})] \,,\, \ldots \,,\, \hat{\phi}_{y_1 y_2}[q_1^{(\hat{h}_{12})} + q_2^{(\hat{h}_{12})} + 1] \right]^{\mathrm{T}}$$

est formé et que les deux réponses impulsionnelles sont estimé comme suit:

$$\left[ \begin{array}{c} \hat{\tilde{h}}_{21} \\ \hat{\tilde{h}}_{12} \end{array} \right] \stackrel{\text{def}}{=} \left( \left[ \begin{array}{cc} \hat{\bar{\phi}}_{y_1 y_1} & \hat{\phi}_{y_2 y_2} \end{array} \right] + \delta \cdot \mathbf{I} \right)^{-1} \hat{\phi}_{y_1 y_2}$$

,

dans lequel l'opérateur $(\bullet)^{-1}$ désigne l'inversion de la matrice et $\mathbf{I}$ désigne la matrice d'identité et les deux réponses impulsionnelles estimées servent à maintenir du filtre de compensation (KFT, KFF) pour compenser la télédiaphonie FEXT, dans laquelle les paires (1, 1') ne sont pas réciproque couplé.

**15.** Procédé selon la revendication 14, **caractérisé en ce que** par l'intermédiaire du paramètre positif $\delta$ est obtenu une estimation régularisée des deux réponses impulsionnelles.

FIG. 1

FIG. 2

FIG. 3

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1775851 A1
- US 6996230 B1
- US 6553085 B1
- EP 0522534 B1
- DE 102007018585 B4
- EP 1775851 A

**In der Beschreibung aufgeführte Nicht-Patentliteratur**

- **IM, G.-H. ; WERNER, J.-J.** Bandwidth-Efficient Digital Transmission over Unshielded Twisted-Pair Wiring. *Fachzeitschrift IEEE Journal on Selected Areas in Communications,* 1995, vol. 13, 1643-1655
- **LUCKY, R. W.** Signal filtering with the transversal equalizer. *Allerton Conference on Circuit and System Theory,* 1969, 792-803
- **BRADY, D. M.** An adaptive coherent diversity receiver for data transmission through dispersive media. *Proceedings of IEEE International Conference on Communications 1970,* 1970, 21-35, 21-39
- **WEINSTEIN, S. B.** A Passband Data-Driven Echo Canceller for Full-Duplex Transmission on Two-Wire Circuits. *Fachzeitschriften IEEE Transcations on Communications,* 1977, vol. 25, 654-666
- **FALCONER, D. D. ; MUELLER, K. H. O.** Adaptive echo cancellation/AGC structures for two-wire full-duplex transmission on two-wire circuits. *The Bell System Technical Journal,* 1979, vol. 58, 1593-1616
- **WERNER, J.-J.** An Echo-Cancellation-Based 4800 Bit/s Full-Duplex DDD Modem. *IEEE Journal on Selected Areas in Communications,* 1984, vol. 2, 722-730
- **IM, G.-H. ; WERNER, J.-J.** Bandwidth-Efficient Digital Transmission over Unshielded Twisted-Pair Wiring. *IEEE Journal on Selected Areas in Communications,* 1995, vol. 13, 1643-1655
- *IEEE Journal on Selected Areas in Communications,* 1995, vol. 13, 1643-1655
- **LANKL, B.** Cross Polarization Interference Canceller for QAM Digital Radio Systems with Asynchronous Clock and Carrier Signals. *Proc. Globecom,* 1986, 15.3.1-15.3.7